# EUROPEAN PATENT APPLICATION

(11) **EP 2 475 170 A1**
(43) Date of publication of application: **11.07.2012**
(21) Application number: 10821695.3
(22) Date of filing: 24.08.2010
(51) Int. Cl.: H04N 7/173, G06F 13/00, H04L 12/56

(54) **CONTENT DELIVERY SYSTEM**

(30) Priority: 08.10.2009 JP 2009233966
(71) Applicant: NEC Corporation, Tokyo 108-8001 (JP)
(72) Inventor: NOGAMI, Kousuke, Tokyo 108-8001 (JP); ISHIKAWA, Kazushige, Tokyo 108-8001 (JP)
(74) Representative: Betten & Resch
(86) International application number: PCT/JP2010/005191
(87) International publication number: WO 2011/043017

(57) **Abstract**

A content distribution system 100 includes user equipment 110, an application server system 120, and a connection control system 130. The user equipment 110 transmits a determination request of requesting determination of a communication bandwidth to the system 120 before transmission of a transmission request for establishing a connection for receiving content data. The system 120 acquires equipment attribute information representing the ability of the user equipment 110 based on the determination request, determines a communication bandwidth based on the equipment attribute information, and transmits the communication bandwidth to the user equipment 110. The user equipment 110 transmits a content transmission request including the received communication bandwidth to the system 130. The system 130 establishes a connection having the communication bandwidth included in the received content transmission request.

## Description

### TECHNICAL FIELD

The present invention relates to a content distribution system that transmits content data representing content to user equipment.

### BACKGROUND ART

A content distribution system described in Patent Document 1 as one of content distribution systems includes a server device configured to transmit content data in which content is coded with a specified code rate, and client equipment configured to receive content data and output content represented by the content data.

The server device acquires attribute information relating to output of content by the client equipment and band information relating to a band of a network, and determines a code rate of content data to be transmitted to the client equipment based on the acquired attribute information and band information.

On the other hand, as described in Non-Patent Document 1, there is a proposed content distribution system that uses a network of communication band guarantee type called NGN (Next Generation Network).

In this content distribution system, the user equipment transmits a content transmission request including data identification information for identifying content data, to a connection control device. The content transmission request includes a communication bandwidth that is necessary for transmission of the content data to the user equipment. Upon reception of the content transmission request, the connection control device executes a process for reserving a communication band having the communication bandwidth included in the content transmission request.

After that, when the server device receives the content transmission request from the connection control device, the server device transmits response information to the connection control device. Thus, the connection control device executes a band fixation process of instructing a communication relay device, which configures a reserved communication band and relays communication, to fix the communication band. As a result, a connection having the abovementioned communication bandwidth is established. Then, the server device transmits the content data to the user equipment by using the established connection.

[Patent Document 1] Japanese Patent Publication No. 4108640

[Non-Patent Document 1] "Telecommunications and Internet converged Services and Protocols for Advanced Networking (TISPAN); IMS-based IPTV stage 3 specification," Technical Specification (ETSI TS 183 063 V2.1.0), European Telecommunications Standards Institute, June 2008, pp23-26 and pup72-75

A case that a user wants to keep viewing content the user is viewing by using first user equipment, by using second user equipment and there is a difference of equipment attribute information between the first user equipment and the second user equipment will be simulated. Herein, equipment attribute information is information representing the ability of the user equipment to output content based on content data. For example, equipment attribute information includes information representing the resolution of a display of the user equipment, the information processing ability of the user equipment, and the like. To be specific, such a case that the first user equipment is a large-screen television and the second user equipment is mobile equipment is considered.

In this case, for example, there is a fear that when the second user equipment transmits a content transmission request including the same data identification information as data identification information included in a content transmission request transmitted by the first user equipment, to the connection control device, the second user equipment receive content data that the second user equipment cannot output (output-impossible content data). Thus, the content distribution system described above has a problem that output-impossible content data may be transmitted to the user equipment.

Further, in a case that the technique described in Patent Document 1 is applied to this content distribution system , the connection control device once reserves a communication band at a moment that the user equipment transmits a content transmission request to the connection control device. Therefore, there is also a problem that even when the server device sets a code rate of content data to be transmitted to the user equipment to a smaller value later, the communication band is uselessly guaranteed during a period from a moment of reservation of the communication band to a moment of change of a communication bandwidth of the communication band or to a moment of release of the communication band.

### SUMMARY

Accordingly, an object of the present invention is to provide a content distribution system capable of solving the aforementioned problems, "a communication bandwidth may be short" and "output-impossible content data may be transmitted to the user equipment."

In order to achieve the object, a content distribution system of an exemplary embodiment of the present invention includes user equipment, an application server system, and a connection control system.
The user equipment is equipped with a bandwidth determination request transmitting means for transmitting a bandwidth determination request that is a request for determination of a communication bandwidth to the application server system before transmitting a content transmission request for establishing a connection used for receiving content data that is coded with a specified code rate and that represents content.
The application server system is equipped with: an equipment attribute information acquiring means for receiving the bandwidth determination request transmitted by the user equipment and, based on the received bandwidth determination request, acquiring equipment attribute information representing ability of the user equipment, which is ability of the user equipment to output content based on content data representing the content; and a communication bandwidth transmitting means for determining a communication bandwidth based on the acquired equipment attribute information and transmitting the determined communication bandwidth to the user equipment.
The user equipment is further equipped with a content transmission request transmitting means for receiving the communication bandwidth transmitted by the application server system and transmitting a content transmission request that includes the received communication bandwidth and that is a request for transmission of the content data, to the connection control system.
The connection control system is equipped with a connection establishing means for receiving the content transmission request from the user equipment and establishing a connection between the application server system and the user equipment, which is a connection having the communication bandwidth included in the received content transmission request.
The application server system is further equipped with a content transmitting means for transmitting the content data coded with a code rate corresponding to the determined communication bandwidth, to the user equipment by using the established connection.

Further, a content distribution method of another exemplary embodiment of the present invention is a method applied to a content distribution system including user equipment, an application server system and a connection control system. The content distribution method includes:
before transmitting a content transmission request for establishing a connection used for receiving content data that is coded with a specified code rate and that represents content, transmitting a bandwidth determination request that is a request for determination of a communication bandwidth to the application server system, by the user equipment;
receiving the bandwidth determination request transmitted by the user equipment and, based on the received bandwidth determination request, acquiring equipment attribute information representing ability of the user equipment, which is ability of the user equipment to output content based on content data representing the content, by the application server system;
determining a communication bandwidth based on the acquired equipment attribute information and transmitting the determined communication bandwidth to the user equipment, by the application server system;
receiving the communication bandwidth transmitted by the application server system and transmitting a content transmission request that includes the received communication bandwidth and that is a request for transmission of the content data, to the connection control system, by the user equipment;
receiving the content transmission request from the user equipment and establishing a connection between the application server system and the user equipment, which is a connection having the communication bandwidth included in the received content transmission request, by the connection control system; and
transmitting the content data coded with a code rate corresponding to the determined communication bandwidth, to the user equipment by using the established connection, by the application server system.

Further, user equipment of another exemplary embodiment of the present invention indudes:
a bandwidth determination request transmitting means for transmitting a bandwidth determination request that is a request for determination of a communication bandwidth to an application server system before transmitting a content transmission request for establishing a connection used for receiving content data that is coded with a specified code rate and that represents content; and
a content transmission request transmitting means for receiving the communication bandwidth transmitted by the application server system and transmitting a content transmission request that includes the received communication bandwidth and that is a request for transmission of the content data, to the connection control system.

Further, a program of another exemplary embodiment of the present invention is a computer program including instructions for causing user equipment to realize:
a bandwidth determination request transmitting means for transmitting a bandwidth determination request that is a request for determination of a communication bandwidth to an application server system before transmitting a content transmission request for establishing a connection used for receiving content data that is coded with a specified code rate and that represents content; and
a content transmission request transmitting means for receiving the communication bandwidth transmitted by the application server system and transmitting a content transmission request that includes the received communication bandwidth and that is a request for transmission of the content data, to the connection control system.

Further, a server device of another exemplary embodiment of the present invention includes:
an equipment attribute information acquiring means for receiving a bandwidth determination request transmitted by user equipment as a request for determination of a communication bandwidth and, based on the received bandwidth determination request, acquiring equipment attribute information representing ability of the user equipment, which is ability of the user equipment to output content based on content data representing the content; and
a communication bandwidth transmitting means for determining a communication bandwidth based on the acquired equipment attribute information and transmitting the determined communication bandwidth to the user equipment.

Further, a program of another exemplary embodiment of the present invention is a computer program including instructions for causing a server device to realize:
an equipment attribute information acquiring means for receiving a bandwidth determination request transmitted by user equipment as a request for determination of a communication bandwidth and, based on the received bandwidth determination request, acquiring equipment attribute information representing ability of the user equipment, which is ability of the user equipment to output content based on content data representing the content; and
a communication bandwidth transmitting means for determining a communication bandwidth based on the acquired equipment attribute information and transmitting the determined communication bandwidth to the user equipment.

With the configurations described above, the present invention can inhibit shortage of a communication bandwidth, and can also prevent transmission of output-impossible content data to the user equipment.

### BRIEF DESCRIPTION OF DRAWINGS

Fig. 1 is a diagram showing a schematic configuration of a content distribution system according to a first exemplary embodiment of the present invention;
Fig. 2 is a block diagram schematically showing a function of the content distribution system according to the first exemplary embodiment of the present invention;
Fig. 3 is a table showing equipment identification information, resolution information and ability level information that are stored by a user information management server according to the first exemplary embodiment of the present invention;
Fig. 4 is a table showing a communication bandwidth, resolution information and ability level information that are stored by a portal server according to the first exemplary embodiment of the present invention;
Fig. 5 is a sequence diagram showing an operation of the content distribution system according to the first exemplary embodiment of the present invention;
Fig. 6 is a sequence diagram showing an operation of the content distribution system following the operation shown in Fig. 5;
Fig. 7 is a sequence diagram showing an operation of the content distribution system following the operation shown in Fig. 6;
Fig. 8 is a block diagram schematically showing a function of a content distribution system according to a modified example 1 of the first exemplary embodiment of the present invention;
Fig. 9 is a table showing content identification information, data identification information, resolution information, minimum level information, maximum level information and a communication bandwidth that are stored by a service control server according to the modified example 1 of the first exemplary embodiment of the present invention;
Fig. 10 is a sequence diagram showing an operation of the content distribution system according to the modified example 1 of the first exemplary embodiment of the present invention;
Fig. 11 is a diagram showing a schematic configuration of a content distribution system according to another modified example of the first exemplary embodiment of the present invention;
Fig. 12 is a block diagram schematically showing a function of a content distribution system according to a second exemplary embodiment of the present invention;
Fig. 13 is a sequence diagram showing an operation of the content distribution system according to the second exemplary embodiment of the present invention;
Fig. 14 is a sequence diagram showing an operation of a content distribution system according to a modified example 1 of the second exemplary embodiment of the present invention;
Fig. 15 is a sequence diagram showing an operation of the content distribution system following the operation shown in Fig. 14;
Fig. 16 is a sequence diagram showing an operation of the content distribution system following the operation shown in Fig. 15;
Fig. 17 is a sequence diagram showing an operation of the content distribution system following the operation shown in Fig. 16;
Fig. 18 is a block diagram schematically showing a function of a content distribution system according to a third exemplary embodiment of the present invention;
Fig. 19 is a sequence diagram showing an operation of the content distribution system according to the third exemplary embodiment of the present invention;
Fig. 20 is a sequence diagram showing an operation of the content distribution system following the operation shown in Fig. 19;
Fig. 21 is a sequence diagram showing an operation of the content distribution system following the operation shown in Fig. 20;
Fig. 22 is a sequence diagram showing an operation of the content distribution system following the operation shown in Fig. 21; and
Fig. 23 is a block diagram schematically showing a content distribution system according to a fourth exemplary embodiment of the present invention.

### EXEMPLARY EMBODIMENTS

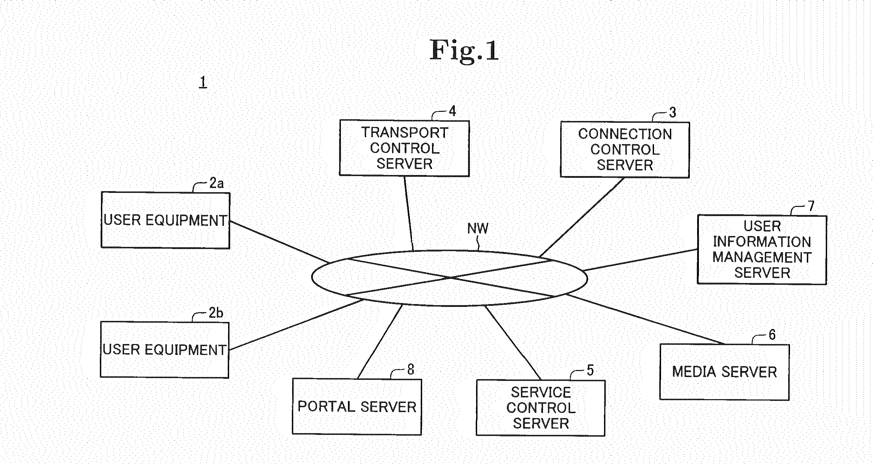

Below, respective exemplary embodiments of a content distribution system, a content distribution method, user equipment, a program and a server device according to the present invention will be described with reference to Figs. 1 to 23.

### <First Exemplary Embodiment>

### (configuration)

As shown in Fig. 1, a content distribution system 1 according to a first exemplary embodiment is a video on demand system. The content distribution system 1 may be an internet protocol television (IPTV) system other than the VoD system, for example, a broadcast (BC) system that broadcasts content and a network personal video recorder (nPVR) system that performs unicast distribution of broadcast content recorded in advance.

The content distribution system 1 includes a plurality of user equipment (user equipment devices) 2a, 2b ..., a connection control server 3, a transport control server 4, a service control server 5, a media server 6, a user information management server 7, and a portal server 8.

The plurality of (in this exemplary embodiment, two) user equipment 2a and 2b, the connection control server 3, the transport control server 4, the service control server 5, the media server 6, the user information management server 7 and the portal server 8 are connected so as to be capable of communicating with each other via a communication line NW configuring an Internet Protocol (IP) network.

The connection control server 3 and the transport control server 4 configure a connection control system. The service control server 5, the media server 6, the user information management server 7 and the portal server 8 configure an application server system. In this exemplary embodiment, the content distribution system 1 includes the two user equipment 2a and 2b, but may include three or more user equipment.

Each of the user equipment (UE) 2a, 2b ... is equipped with a central processing unit (CPU), a storage device (a memory, a hard disk drive (HDD), and the like), an input device (in this exemplary embodiment, a plurality of keys), and an output device (in this exemplary embodiment, a display and a speaker), which are not shown in the drawings. Each of the user equipment 2a, 2b ... is configured to realize a function described later by execution of a program stored in a storage device by the CPU.

Each of the user equipment 2a, 2b ... receives content data representing content (in this exemplary embodiment, a moving image composed of sounds and images) transmitted from the media server 6, and outputs the content based on the received content data. Content data is data coded with a specified code rate and representing content.

Further, each of the user equipment 2a, 2b... stores equipment identification information as information for identifying the user equipment (the own equipment) in the storage device. In this exemplary embodiment, equipment identification information is information representing the model (the type) of user equipment. For example, the equipment identification information is "Mobile1" or "mobile2" representing mobile equipment, or "IPTV-STV1" or "IPTV-STV2" representing a set top box.

The connection control server 3, the transport control server 4, the service control server 5, the media server 6, the user information management server 7 and the portal server 8 are each equipped with a CPU and a storage device (a memory, a hard disk drive (HDD), and the like), which are not shown in the drawings. Each of the servers (a server device, an information processing device) 3 to 8 is configured to realize a function described later by execution of a program stored in the storage device by the CPU.

The connection control server 3 is configured to transmit and receive SIP messages (messages compliant with the SIP (Session Initiation Protocol)) and thereby control a connection between the plurality of devices. That is to say, the connection control server 3 is an SIP server.

When receiving an SIP message transmitted by the user equipment (hereinafter, a description will be made by using the user equipment 2a as an example), the connection control server 3 establishes a connection (a session) between the media server 6 and the user equipment 2a based on the received SIP message in cooperation with the transport control server 4.

The service control server 5 controls a service (a service of transmitting content data) provided by the media server 6. The media server 6 transmits content data to the user equipment 2a that a connection has been established by the connection control server 3.

The portal server 8 is configured to transmit and receive messages compliant with HTTP (Hypertext Transfer Protocol) (HTTP messages) and thereby transmit and receive data to and from the user equipment 2a. That is to say, the portal server 8 is a web server configured to be capable of communicating with the user equipment 2a in compliance with HTTP.

### (Function)

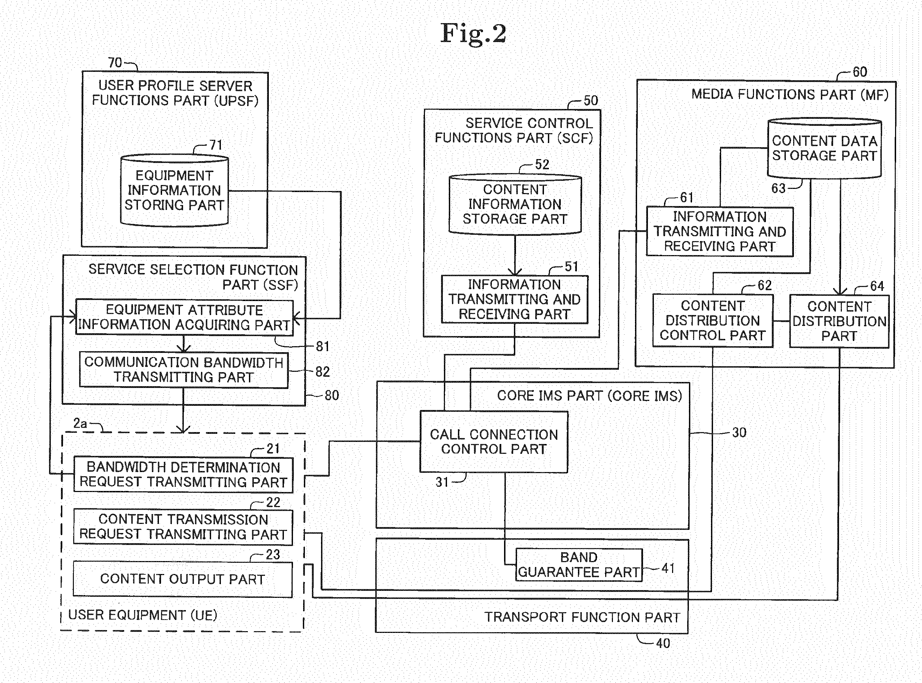

Fig. 2 is a block diagram showing a function of the content distribution system 1 configured as described above.

### (Function: User Equipment)

A function of the user equipment 2a includes a bandwidth determination request transmitting part (a bandwidth determination request transmitting means) 21, a content transmission request transmitting part (a content transmission request transmitting means) 22, and a content output part 23.

The bandwidth determination request transmitting part 21 accepts a bandwidth determination request transmission instruction inputted by the user via the input device. A bandwidth determination request transmission instruction is information representing an instruction to transmit a bandwidth determination request. A bandwidth determination request is information representing a request for determination of a communication bandwidth. Moreover, a bandwidth determination request transmission instruction includes content identification information for identifying content.

Upon acceptance of the bandwidth determination request transmission instruction, the bandwidth determination request transmitting part 21 transmits a bandwidth determination request including equipment identification information stored in the storage device to the portal server 8 in compliance with HTTP.

The content transmission request transmitting part 22 receives (information representing) a communication bandwidth transmitted by the portal server 8. Upon reception of the communication bandwidth, the content transmission request transmitting part 22 acquires data identification information for identifying content data coded with a code rate corresponding to (in this exemplary embodiment, coincident with) the received communication bandwidth, among content data representing content identified by the content identification information included in the bandwidth determination request transmission instruction.

In this exemplary embodiment, the content transmission request transmitting part 22 receives table information including a plurality of combinations of data identification information and a communication bandwidth related with each other from the portal server 8, and acquires data identification information for identifying content data coded with a code rate corresponding to the received communication bandwidth, based on the received table information.

Further, the content transmission request transmitting part 22 transmits a content transmission request that includes the received communication bandwidth and the acquired data identification information and that is a request for transmission of content data, to the connection control server 3 in compliance with SIP. A content transmission request is information representing a request for establishment of a connection used for receiving content data.

Thus, the user equipment 2a is configured to transmit a bandwidth determination request to the application server system before transmitting a content transmission request.

The content output part 23 receives a transmission permission notice (response information) from the connection control server 3. A transmission permission notice is information representing permission of transmission of content data. Upon reception of the transmission permission notice, the content output part 23 transmits a content viewing request including data identification information to the media server 6. Moreover, the content output part 23 transmits a reproduction start request to the media server 6 in compliance with a specified communication protocol (in this exemplary embodiment, RTSP (Real Time Streaming Protocol). A reproduction start request is information representing a request for start of transmission of content data.

Thus, the content output part 23 receives content data from the media server 6. Upon reception of content data, the content output part 23 outputs content represented by the received content data via the output device.

### (Function: Connection Control System)

A function of the connection control server 3 includes a core IMS (Internet Protocol Multimedia Subsystem) part 30. Moreover, a function of the transport control server 4 includes a transport function (TF) part 40.

The core IMS part 30 includes a call connection control part 31. Moreover, the transport function part 40 includes a band guarantee part 41.

The call connection control part 31 transmits and receives SIP messages and thereby controls a connection between a plurality of devices.

Upon reception of the content transmission request from the user equipment 2a, the call connection control part 31 generates a band reservation instruction for instructing to reserve a communication band between the media server 6 and the user equipment 2a. The band reservation instruction includes the communication bandwidth included in the content transmission request.

In this exemplary embodiment, a band reservation instruction is a Diameter message (a message compliant with Diameter as a communication protocol). The call connection control part 31 transmits the generated band reservation instruction to the transport control server 4.

When receiving a reservation process response transmitted from the transport control server 4 in response to the band reservation instruction, the call connection control part 31 transmits (transfers) the content transmission request received from the user equipment 2a, to the service control server 5.

Further, when receiving a transmission permission notice (response information) from the service control server 5, the call connection control part 31 generates a band fixation instruction for instructing to fix (commit) the reserved communication band (fix guarantee of the reserved communication band). A band fixation instruction includes communication band specification information for specifying the reserved communication band. In this exemplary embodiment, the band fixation instruction is a Diameter message. The call connection control part 31 transmits the generated band fixation instruction to the transport control server 4.

When receiving a fixation process response transmitted from the transport control server 4 in response to the band fixation instructions, the call connection control part 31 transmits (transfers) the transmission permission notice received from the service control server 5, to the user equipment 2a.

The band guarantee part 41 stores used communication band information that represents a reserved or fixed communication band, into the storage device. Used communication band information includes communication band specification information and a communication bandwidth.

Upon reception of the band reservation instruction fro the connection control server 3, the band guarantee part 41 executes a band reservation process of reserving a communication band that is other than a communication band represented by the stored used communication band information and that has the communication bandwidth included in the band reservation instruction. That is to say, the band guarantee part 41 newly stores the used communication band information representing the communication band into the storage device.

Upon succession of execution of the band reservation process (i.e., upon reservation of the communication band), the band guarantee part 41 transmits a reservation process response representing success of reservation of the communication band to the connection control server 3. A reservation response is a Diameter message.

Furthermore, upon reception of the band fixation instruction from the connection control server 3, the band guarantee part 41 executes a band fixation process of instructing a communication relay device (e.g., a router), which configures a communication band (i.e., the reserved communication band) specified by the communication band specification information included in the band fixation instruction among communication bands represented by the stored used communication band information and which relays communication, to fix the communication band. Thus, the communication relay device executes a packet priority control, and so on.

Upon succession of execution of the band fixation process (i.e., upon fixation of the reserved communication band), the band guarantee part 41 transmits a fixation process response representing success of fixation of the communication band to the connection control server 3. In this exemplary embodiment, a fixation process response is a Diameter message.

Thus, the connection control server 3 and the transport control server 4 configure a connection establishing means for receiving a content transmission request from the user equipment 2a and establishing a connection that is between the media server 6 and the user equipment 2a and that has a communication bandwidth included in the received content transmission request.

### (Function: User Information Management Server)

A function of the user information management server 7 includes a user profile server functions (UPSF) part 70.

The user profile server functions part 70 stores profile information of users of the user equipment 2a, 2b... The user profile server functions part 70 includes an equipment information storing part (an equipment information storing means) 71.

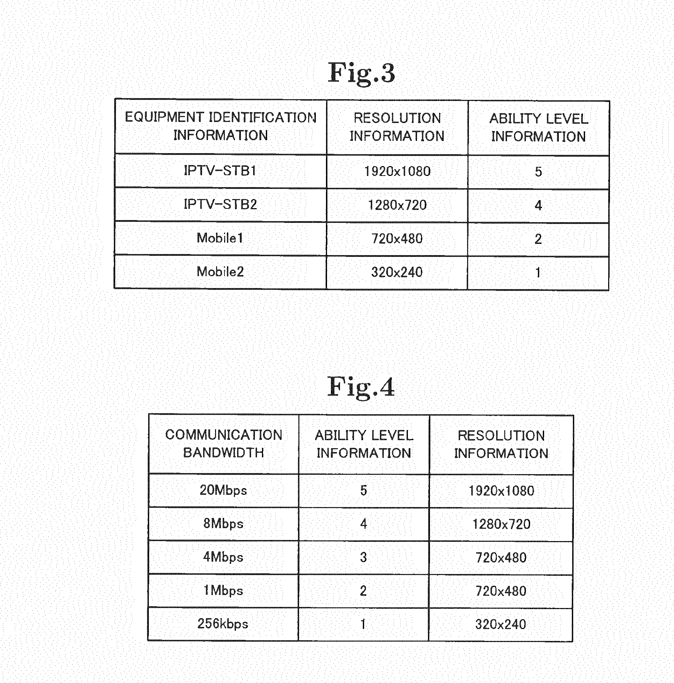

The equipment information storing part 71 preliminarily stores equipment identification information and equipment attribute information in association with each other as shown in Fig. 3. In this exemplary embodiment, equipment attribute information includes resolution information representing the resolution of the display of each of the user equipment 2a, 2b... and ability level information representing the ability level of each of the user equipment 2a, 2b...

In this exemplary embodiment, the ability level of each of the user equipment 2a, 2b... is a value that becomes larger as the information processing ability of the central processing unit of the user equipment becomes higher, that becomes larger as the number of formats of content data that the user equipment can output becomes more, and that becomes larger as the storage capacity of the storage device of the user equipment becomes larger. In this exemplary embodiment, ability level information is information representing five levels from "1" to "5."

Thus, it can be said that equipment attribute information is information representing the ability of each of the user equipment 2a, 2b..., which is the ability of the user equipment to output content based on content data representing the content.

For example, the equipment information storing part 71 stores equipment identification information "Mobilel," resolution information "720×480" representing lateral resolution "720" and longitudinal resolution"480," and ability level information "2" in association with each other.

The user profile server functions part 70 receives an equipment information transmission request from the portal server 8. An equipment information transmission request is information including equipment identification information and representing a request for transmission of equipment attribute information. Upon reception of the equipment information transmission request, the user profile server functions part 70 transmits the equipment attribute information stored in the equipment information storing part 71 in association with the equipment identification information included in the equipment information transmission request, to the portal server 8.

### (Function: Service Control Server)

A function of the service control server 5 includes a service control functions (SCF) part 50.
The service control functions part 50 includes an information transmitting and receiving part 51 and a content information storage part 52.

The information transmitting and receiving part 51 receives an SIP message as a content transmission request transmitted by the user equipment 2a. A content transmission request includes data identification information and a communication bandwidth.

The content information storage part 52 preliminarily stores data identification information, and server information for identifying a media server that can transmit content data identified by the data identification, in association with each other.

Upon reception of the SIP message as the content transmission request, the information transmitting and receiving part 51 selects a media server (in this exemplary embodiment, the media server 6) identified by the server identification information stored in the content information storage part 52 in association with the data identification information included in the received content transmission request.

Then, the information transmitting and receiving part 51 transmits (transfers) the received content transmission request to the selected media server 6 via the connection control server 3. Moreover, when receiving a transmission permission notice transmitted by the media server 6, the information transmitting and receiving part 51 transmits the received trans mission permission notice to the connection control server 3.

### (Function: Media Server)

A function of the media server 6 includes a media functions (MF) part 60. The media functions part 60 includes a media control functions (MCF) part and a media delivery functions (MDF) part.

The media functions part 60 includes an information transmitting and receiving part (a response information transmitting means) 61, a content distribution control part 62, a content data storage part 63, and a content distribution part (a content transmitting means) 64.

Upon reception of the content transmission request, the information transmitting and receiving part 61 transmits an SIP message as a transmission permission notice to the service control server 5 via the connection control server 3. A transmission permission notice is response information for instructing a communication relay device, which configures a reserved communication band and relays communication, to fix the communication band. In this exemplary embodiment, a transmission permission notice is transmitted as an OK message (a response including a status code "200" and "OK" in an initial line) among SIP messages.

Further, the information transmitting and receiving part 61 receives a content viewing request from the user equipment 2a. A content viewing request includes data identification information. Moreover, the information transmitting and receiving part 61 receives a reproduction start request in compliance with a specified protocol (in this exemplary embodiment, RTSP (Real Time Streaming Protocol) from the user equipment 2a. A reproduction start request is information representing a request for start of transmission of content data.

The content data storage part 63 preliminarily stores content data and data identification information for identifying the content data in association with each other.

When the reproduction start request is received by the information transmitting and receiving part 61, the content distribution part 64 specifics content data identified by the data identification information included in the content viewing request received by the information transmitting and receiving part 61, from among the content data stored in the content data storage part 3.

Then, the content distribution part 64 transmits the specified content data to the user equipment 2a. At this moment, the content distribution part 64 transmits data in compliance with a specified communication protocol (in this exemplary embodiment, RTP (Real-time Transport Protocol)) by using the connection (the session) established by the connection control system.

### (Function: Portal Server)

A functions of the portal server 8 includes a service selection function (SSF) part 80. The service selection function part 80 includes an equipment attribute information acquiring part (an equipment attribute information acquiring means) 81, and a communication bandwidth transmitting part (a communication bandwidth transmitting means) 82.

The equipment attribute information acquiring part 81 receives a bandwidth determination request transmitted by the user equipment 2a. Upon reception of the bandwidth determination request, the equipment attribute information acquiring part 81 transmits an equipment information transmission request including equipment identification information included in the received bandwidth determination request, to the user information management server 7. The equipment attribute information acquiring part 81 receives (acquires) equipment attribute information transmitted by the user information management server 7 in response to the equipment information transmission request.

Thus, the equipment attribute information acquiring part 81 acquires equipment attribute information stored in the equipment information storing part 71 in association with the equipment identification information include in the received bandwidth determination request.

The communication bandwidth transmitting part 82 determines a communication bandwidth based on the equipment attribute information acquired by the equipment attribute information acquiring part 81.

To be specific, the communication bandwidth transmitting part 82 preliminarily stores a communication bandwidth and equipment attribute information (in this exemplary embodiment, ability level information and resolution information) in association with each other as shown in Fig. 4. For example, the communication bandwidth transmitting part 82 stores a communication bandwidth "1Mbps," resolution information "720×480" representing lateral resolution "720" and longitudinal resolution "480," and ability level information "2" in association with each other.

The communication bandwidth transmitting part 82 acquires (determines) a communication bandwidth stored in association with the equipment attribute information acquired by the equipment attribute information acquiring part 81, The communication bandwidth transmitting part 82 transmits the determined communication bandwidth to the user equipment 2a.

As described above, upon reception of the communication bandwidth, the user equipment 2a transmits a content transmission request including data identification information for identifying content data coded with a code rate corresponding to the received communication bandwidth, to the media server 6. In other words, it can be said that the content distribution part 64 transmits content data coded with a code rate corresponding to the communication bandwidth determined by the communication bandwidth transmitting part 82, to the user equipment 2 by using the established connection.

### (Operation)

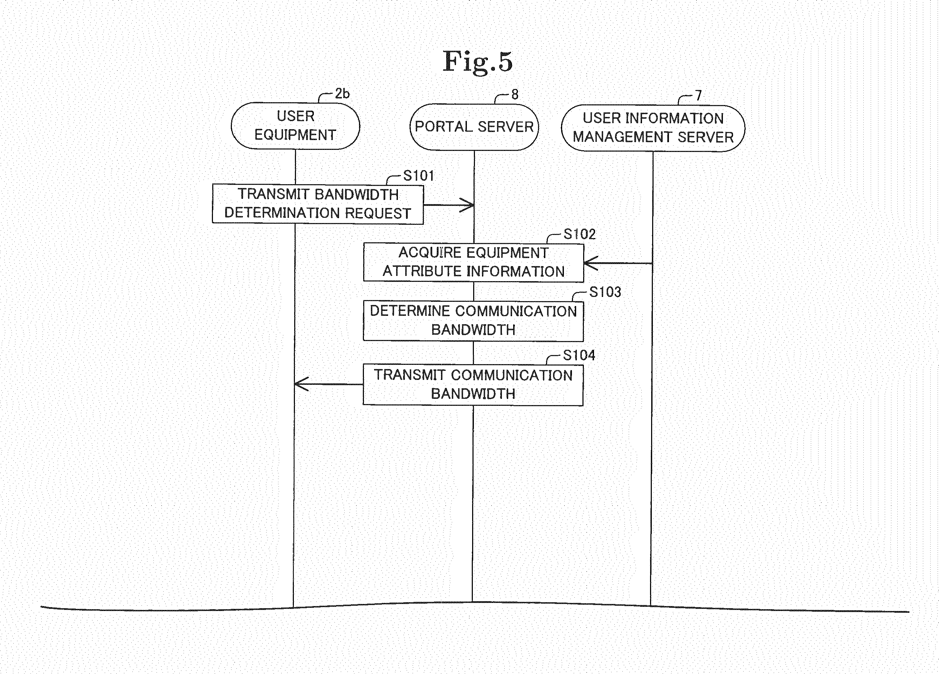

Next, an operation according to the present invention of the content distribution system 1 configured as described above will be explained with reference to sequence diagrams of Figs. 5 to 7.

First, a case that the user equipment 2a receives content data identified by data identification information "data1111" from the media server 6 and outputs content represented by the received content data will be simulated. Herein, a case that equipment identification information for identifying the user equipment 2a is "IPTV-STB1" will be simulated.

A case that, in the above case, the user of the user equipment 2a wants to keep viewing content by using the user equipment 2b will be simulated. Herein, a case that equipment identification information for identifying the user equipment 2b is "Mobile1" will be simulated.

In this exemplary embodiment, the user equipment 2a transmits data identification information "data1111" to the user equipment 2b by radio communication (infrared communication, Bluetooth ™, etc.) in accordance with a transfer instruction inputted by the user. The user equipment 2a may be configured to transmit data identification information to the user equipment 2b via the portal server 8.

Upon reception of the data identification information from the user equipment 2a, the user equipment 2b acquires content identification information (in this exemplary embodiment, "content111") for identifying content represented by the content data identified by the received data identification information. Next, the user of the user equipment 2b inputs a bandwidth determination request transmission instruction including the acquired content identification information.

Thus, the user equipment 2b accepts the bandwidth determination request transmission instructions, and transmits a bandwidth determination request including equipment identification information stored in the storage device to the portal server 8 (step S101 1 of Fig. 5).

Upon reception of the bandwidth determination request, the portal server 8 transmits an equipment information transmission request including the equipment identification information included in the received bandwidth determination request, to the user information management server 7. Thus, the portal server 8 acquires the equipment attribute information (resolution information "720×480" and ability level information "2") stored in the user information management server 7 in association with the received equipment identification information ("Mobilel") (step S102 of Fig. 5).

Then, the portal server 8 determines a communication bandwidth based on the acquired equipment attribute information. To be specific, the portal server 8 acquires (determines) a communication bandwidth ("1Mbps") stored in association with the acquired equipment attribute information (step S103 of Fig. 5). Next, the portal server 8 transmits the determined communication bandwidth to the user equipment 2b (step S104 of Fig. 5).

Thus, upon reception of the communication bandwidth, the user equipment 2b acquires data identification information. (in this exemplary embodiment, "data1114") for identifying content data coded with a code rate corresponding to (in this exemplary embodiment, coincident with) the received communication bandwidth, among content data representing content identified by the content identification information included in the bandwidth determination request transmission instruction.

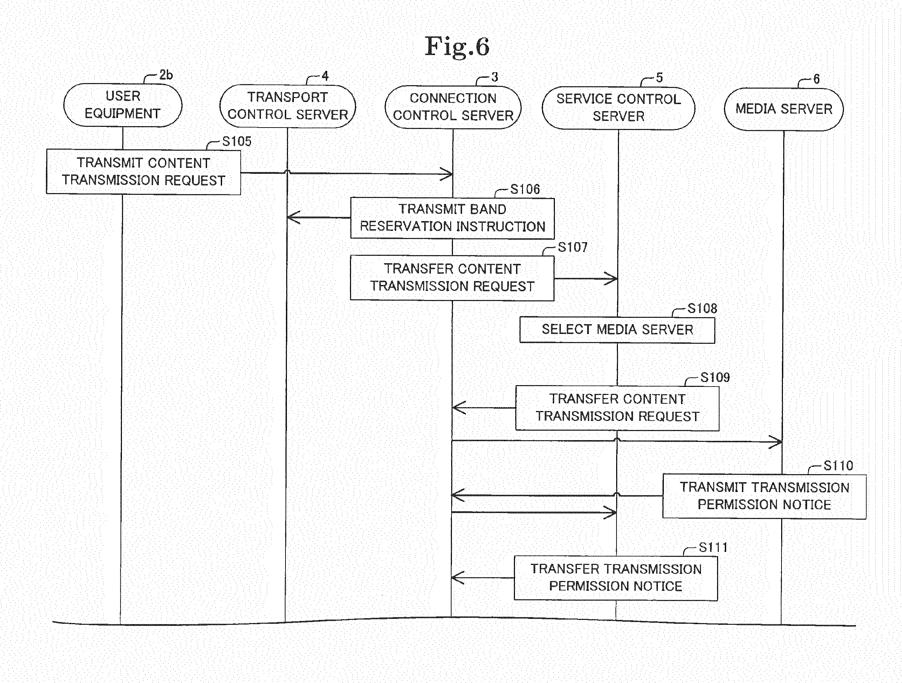

Then, the user equipment 2b transmits a content transmission request including the received communication bandwidth ("1Mbps") and the acquired data identification information ("data1114") to the connection control server 3 (step S105 of Fig. 6). In this exemplary embodiment, a content transmission request is transmitted as an INVITE message (a message with "INVITE" set as a method) among SIP messages.

Upon reception of the content transmission request, the connection control server 3 transmits a band reservation instruction for instructing to reserve a communication band between the media server 6 and the user equipment 2b, to the transport control server 4 (step S106 of Fig. 6).

Thus, the transport control server 4 executes a band reservation process of reserving a communication band that is other than a communication band represented by the stored used communication band information and that has a communication bandwidth included in the band reservation instructions.

Next, the connection control server 3 transfers the content transmission request received from the user equipment 2b to the service control server 5 (step S107 of Fig. 6).

Thus, the service control server 5 receives the content transmission request. Then, the service control server 5 selects a media server (in this exemplary embodiment, the media server 6) identified by the server identification information stored in association with the data identification information included in the received content transmission request (step S108 of Fig. 6).

Next, the service control server 5 transmits (transfers) the received content transmission request to the selected media server 6 via the connection control server 3 (step S109 of Fig. 6).

Then, upon reception of the content transmission request, the media server 6 transmits an SIP message as a transmission permission notice, to the service control server 5 via the connection control server3 (step S110 of Fig. 6).

Next, upon reception of the transmission permission notice transmitted by the media server 6, the service control server 5 transmits the received transmission permission notice to the connection control server 3 (step S111 of Fig. 6).

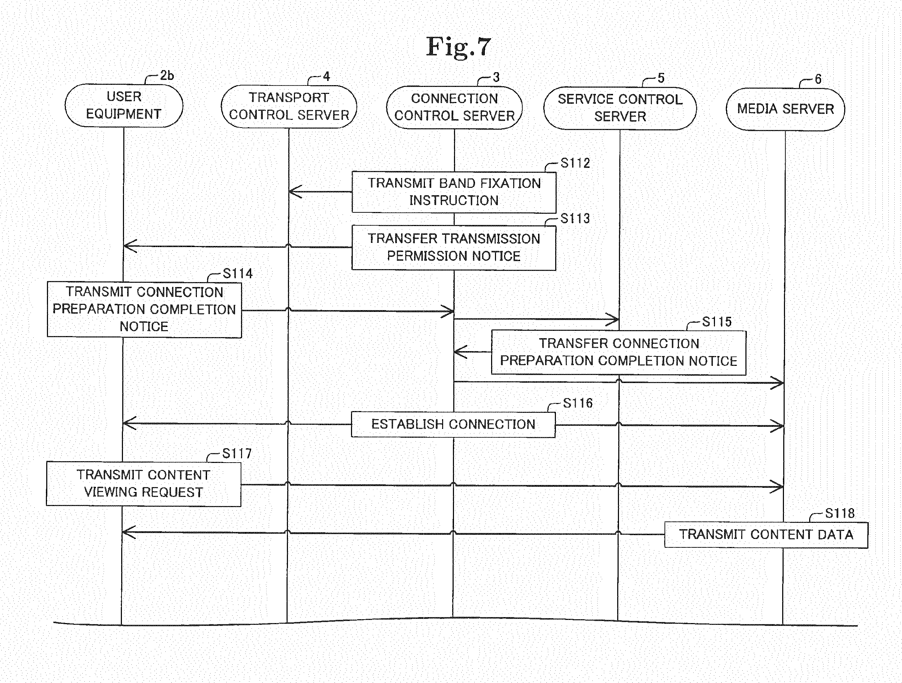

Next, upon reception of the transmission permission notice from the service control server 5, the connection control server 3 transmits a band fixation instruction for instructing to fix (commit) a reserved communication band, to the transport control server 4 (step S 112 of Fig. 7).

Thus, the transport control server 4 executes a band fixation process of instructing a communication relay device, which configures a communication band (i.e., the reserved communication band) specified by communication band specification information included in the band fixation instruction among communication bands represented by the stored used communication band information and which relays communication, to fix the communication band. As a result, the communication relay device executes a packet priority control, and so on.

Next, the connection control server 3 transfers the transmission permission notice received from the service control server 5 to the user equipment 2b (step S 113 of Fig. 7).
Then, upon reception of the transmission permission notice from the connection control server 3, the user equipment 2b transmits a connection preparation completion notice to the service control server 5 via the connection control server 3 (step S 114 of Fig. 7). A connection preparation completion notice is information representing that preparation for establishment of a connection has been completed.

Next, upon reception of the connection preparation completion notice, the service control server 5 transfers the received connection preparation completion notice to the media server 6 via the connection control server 3 (step S 115 of Fig. 7).

Consequently, a connection between the user equipment 2b and the media server 6 having the communication bandwidth ("1Mbps") included in the content transmission request is established (step S 116 of Fig. 7). In this exemplary embodiment, both a connection for performing communication compliant with RTSP and a connection for performing communication compliant with RTP are simultaneously established.

In this exemplary embodiment, the connection for performing communication compliant with RTP is a connection used for transmitting content data from the media server 6 to the user equipment 2b. Therefore, the content transmission request that the user equipment 2b transmits at step S105 of Fig. 6 is a content transmission request for establishing a connection used for receiving content data.

After that, the user equipment 2b transmits a content viewing request including the data identification information to the media server 6. Moreover, the user equipment 2b transmits a reproduction start request to the media server 6 in compliance with a specified communication protocol (in this exemplary embodiment, RTSP) (step S 117 of Fig. 7).

Thus, the media server 6 transmits content data identified by the data identification information included in the received content viewing request among the content data stored in the content storage part 63, to the user equipment 2b (step S 118 of Fig. 7). At this moment, the media server 6 transmits data compliant with a specified communication protocol (in this exemplary embodiment, RTP) by using the connection (the session) established by the connection control system.

Thus, the user equipment 2b receives the content data from the media server 6. The user equipment 2b outputs content represented by the received content data via the output device.

Accordingly, the user can keep viewing content that the user has been viewing by using the user equipment 2a (in this exemplary embodiment, content identified by the content identification information "content111"), by using the user equipment 2b. At shit moment, content data transmitted from the media server 6 is properly selected depending on the ability of user equipment that receives the content data. Moreover, a communication band having a communication bandwidth necessary for transmitting the content data from the media server 6 to the user equipment is properly guaranteed.

As described above, in the content distribution system 1 according to the first exemplary embodiment, the media server 6 transmits content data coded with a code rate corresponding to a communication bandwidth determined based on the ability of the user equipment 2b, to the user equipment 2b. Consequently, it is possible to prevent the media server 6 from transmitting content data that the user equipment 2b cannot output (output-impossible content data) to the user equipment 2b. As a result, the user equipment 2b can securely output content based on the received content data.

Therefore, in a case that the user wants to keep viewing content that the user has been viewing by using the user equipment 2a (first user equipment), by using the user equipment 2b (second user equipment) and there is a difference of equipment attribute information (e.g., the information processing ability of the user equipment) between the first user equipment and the second user equipment, the user can keep viewing the content by using the second user equipment.

Further, according to the above configuration, the content distribution system 1 determines a communication bandwidth corresponding to the ability of the user equipment 2b before the user equipment 2b transmits a content transmission request. After that, the content distribution system 1 establishes a connection having the determined communication bandwidth. Therefore, it is possible to avoid that a communication band is uselessly guaranteed. As a result, it is possible to inhibit shortage of a communication bandwidth at the time of establishing another connection.

Thus, according to the content distribution system 1, it is possible to inhibit shortage of a communication bandwidth and prevent transmission of output-impossible content data to user equipment.

Besides, in the first exemplary embodiment, the content distribution system 1 is configured so that each of the user equipment 2a, 2b... transmits a bandwidth determination request including equipment identification information and the portal server 8 acquires equipment attribute information based on the equipment identification information.

Therefore, according to the above configuration, it is possible to make the amount of information transmitted from each of the user equipment 2a, 2b... to the portal server 8 smaller than in a case that each of the user equipment 2a, 2b... is configured to transmit equipment attribute information to the portal server 8. As a result, it is possible to reduce a communication load between each of the user equipment 2a, 2b... and the portal server 8.

In addition, in the first exemplary embodiment, the connection control system is configured to, when receiving a content transmission request from each of the user equipment 2a, 2b..., execute a band reservation process of reserving a communication band between the media server 6 and the user equipment.

According to this configuration, a communication band is reserved at a moment that the content transmission request is received by the connection control system, so that it is possible to avoid shortage of a communication bandwidth at the time of actually establishing a connection.

### <Modified Example 1 of First Exemplary Embodiment>

Next, a content distribution system according to a modified example 1 of the first exemplary embodiment of the present invention will be described. The content distribution system according to the modified example 1 is different from the content distribution system according to the first exemplary embodiment in being configured so that a communication bandwidth is determined based on equipment attribute information and content identification information. Therefore, a description will be made below focusing on the different point.

The portal server 8 in the modified example 1 is configured to be capable of transmitting and receiving information to and from the service control server 5 via the connection control server 3 by transmitting and receiving SIP messages.

### (Function)

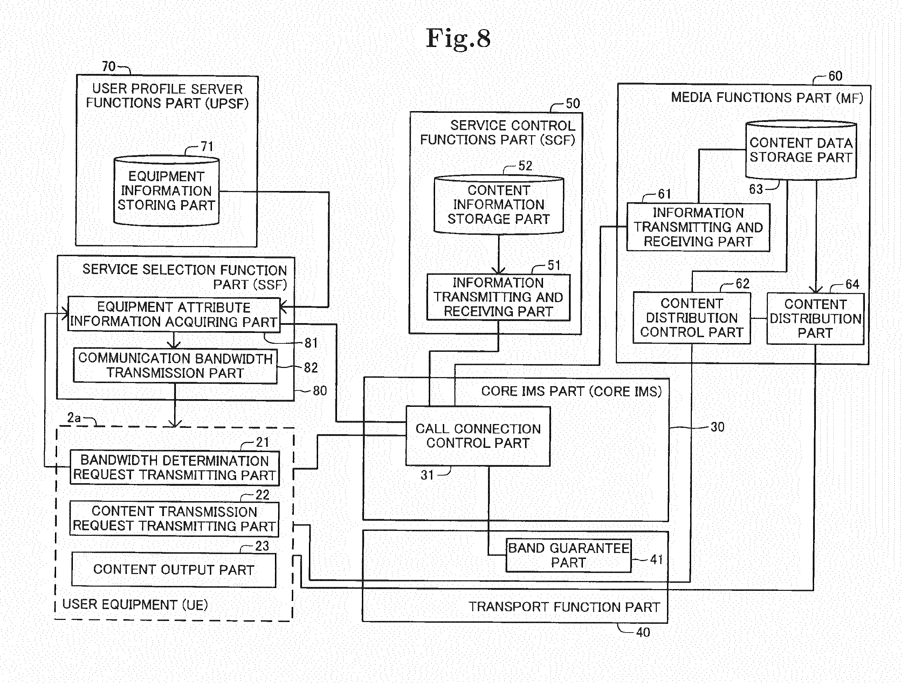

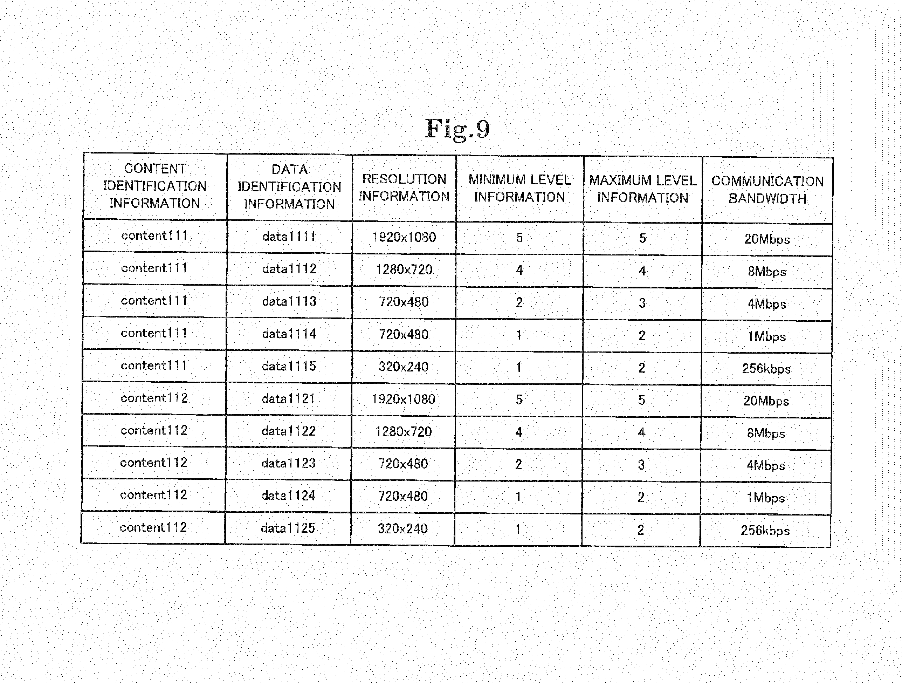

Fig. 8 is a block diagram showing a function of the content distribution system 1 according to the modified example 1.
The content information storage part 52 preliminarily stores content identification information and content attribute information in association with each other as shown in Fig. 9. Content attribute information includes data identification information, resolution information, minimum level information, maximum level information, and a communication bandwidth.

Content identification information is information for identifying content. Data identification information is information for identifying content data (in this exemplary embodiment, data coded with a specified code rate) representing content.

Resolution information is information representing the resolution of content. Minimum level information is information representing a minimum value of the ability level of user equipment necessary for outputting content. Maximum level information is information representing a maximum value of the ability level of user equipment necessary for outputting content. A communication bandwidth is information representing a communication bandwidth necessary for transmitting content data from the media server 6 to the user equipment 2a.

In this exemplary embodiment, the communication bandwidth coincides with a code rate used at the time of coding the content data. The communication bandwidth may be a value of the result of adding a communication bandwidth used for controlling transmission of the content data to the code rate.

For example, the content information storage part 52 stores content identification information "contentlll," data identification information "data1113," resolution information "720×480" representing lateral resolution "720" and longitudinal resolution "480," minimum level information "2," maximum level information "3" and a communication bandwidth "4Mbps" in association with other.

The information transmitting and receiving part 51 receives a content information transmission request transmitted by the portal server 8, from the connection control server 3. A content information transmission request is information including content identification information and representing a request for transmission of content attribute information. Upon reception of the content information transmission request, the information transmitting and receiving part 51 extracts content attribute information stored in the content information storage part 52 in association with the content identification information included in the received content information transmission request.

The information transmitting and receiving part 51 transmits the extracted content attribute information to the portal server 8 via the connection control server 3.

When accepting a bandwidth determination request transmission instructions, the bandwidth determination request transmitting part 21 transmits a bandwidth determination request that includes equipment identification information stored in the storage device and content identification information included in the bandwidth determination request transmission instructions, to the portal server 8 in compliance with HTTP.

The content transmission request transmitting part 22 receives a communication bandwidth and data identification information transmitted by the portal server 8. Upon reception of the communication bandwidth and the data identification information, the content transmission request transmitting part 22 transmits a content transmission request that includes the received communication bandwidth and data identification information and that requests transmission of content data, to the connection control server 3 in compliance with SIP.

Upon reception of the bandwidth determination request, the equipment attribute information acquiring part 81 transmits a content information transmission request including the content identification information included in the received bandwidth determination request, to the service control server 5 via the connection control server 3. The equipment attribute information acquiring part 81 receives (acquires) content attribute information transmitted by the service control server 5 in response to the content information transmission request.

The communication bandwidth transmitting part 82 determines a communication bandwidth and data identification information based on the equipment attribute information and content attribute information acquired by the equipment attribute information acquiring part 81. In other words, it can be said that the communication bandwidth transmitting part 82 determines a communication band based on the content identification information included in the received bandwidth determination request and the acquired equipment attribute information.

To be specific, the communication bandwidth transmitting part 82 selects one of the acquired content attribute information. At this moment, the communication bandwidth transmitting part 82 selects content attribute information that includes resolution information included in the acquired equipment attribute information, minimum level information representing a value equal to or less than ability level information included in the equipment attribute information, and maximum level information representing a value equal to or more than the ability level information included in the equipment attribute information.

For example, in a case that a bandwidth determination request including content identification information "content111" and equipment identification information "mobile" are received, the communication bandwidth transmitting part 82 selects content attribute information including data identification information. "data1113" or content attribute information including data identification information "data1114."

In this exemplary embodiment, the communication bandwidth transmitting part 82 is configured to, in a case that a plurality of content attribute information are selected, select content attribute information including a largest communication bandwidth. Consequently, it is possible to select content data whose quality (image quality and/or sound quality) is as high as possible. Therefore, in the above case, the communication bandwidth transmitting part 82 selects the content attribute information including the data identification information "data1113."

Then, the communication bandwidth transmitting part 82 acquires (determines) a communication bandwidth and data identification information that are included in the acquired content attribute information. The communication bandwidth transmitting part 82 transmits the determined communication bandwidth and data identification information to the user equipment 2a.

Thus, the communication bandwidth transmitting part 82 transmits the determined communication bandwidth and the data identification information for identifying the content data representing the content identified by the content identification information included in the received bandwidth determination request. Moreover, the data identification information is data identification information for identifying content data coded with a code rate corresponding to the determined communication bandwidth. In addition, the data identification information is data identification information for identifying content data having resolution represented by the resolution information included in the acquired equipment attribute information.

### (Operation)

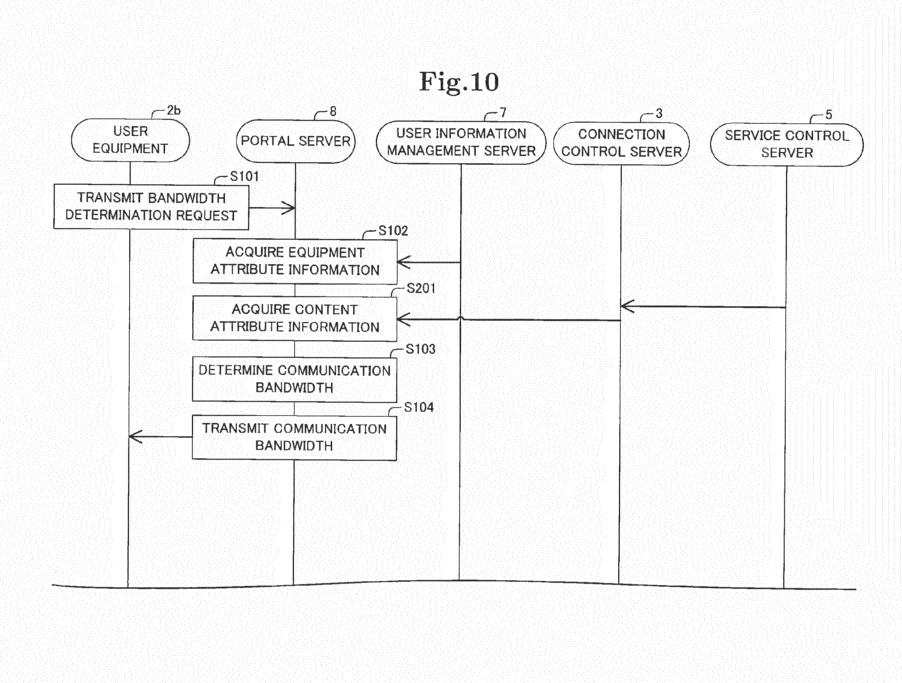

Next, an operation according to the present invention of the content distribution system 1 configured as described above will be explained with reference to a sequence diagram of Fig. 10. Herein, the same situation as the situation of the operation according to the first exemplary embodiment will be simulated. Therefore, an explanation will be made focusing one a different point from the operation of the content distribution system 1 according to the first exemplary embodiment, in the operation of the content distribution system according to the modified example 1.

When the user equipment 2b accepts a bandwidth determination request transmission instruction, the user equipment 2b transmits a bandwidth determination request that includes equipment identification information stored in the storage device and content identification information included in the bandwidth determination request transmission instructions, to the portal server 8 (step S101 of Fig. 10).

Upon reception of the bandwidth determination request, the portal server 8 transmits an equipment information transmission request that includes the equipment identification information included in the receive bandwidth determination request, to the user information management server 7. Thus, the portal server 8 acquires equipment attribute information (resolution information "720x480" and ability level information "2") stored in the user information management server 7 in association with the received equipment identification information ("Mobilel"') (step S102 of Fig. 10).

Next, the portal server 8 transmits a content information transmission request including the content identification information included in the received bandwidth determination request, to the service control server 5 via the connection control server 3. Thus, the portal server 8 acquires content attribute information stored in the service control server 5 in association with the received content identification information ("content111") (step S201 of Fig. 10).

Then, the portal server 8 determines a communication bandwidth, based on the acquired equipment attribute information and content attribute information. To be specific, the portal server 8 selects content attribute information that includes the resolution information included in the acquired equipment attribute information, minimum level information representing a value equal to or less than the ability level information included in the equipment attribute information, and maximum level information representing a value equal to or more than the ability level information included in the equipment attribute information.

Then, the portal server 8 acquires (determines) a communication bandwidth ("4Mbps") and data identification information ("data113") that are included in the selected content attribute information (step S103 of Fig. 10). Next, the portal server 8 transmits the determined communication bandwidth and data identification information to the user equipment 2b (step S 104 of Fig. 10).

Then, the user equipment 2b transmits a content transmission request including the received communication bandwidth ("4Mbps") and the received data identification information ("data1113") to the connection control server 3 (step S105 of Fig. 6).
After that, the content distribution system 1 operates in the same manner as in the first exemplary embodiment.

As described above, the modified example 1 of the first exemplary embodiment of the content distribution system of the present invention can also produce the same actions and effects as in the first exemplary embodiment.
Further, in the modified example 1, the content distribution system 1 determines a communication bandwidth based on content identification information and equipment attribute information.

Accordingly, it is possible to determines, as a communication bandwidth, a value corresponding to a code rate of content data that the media server 6 can transmit among content data representing content that the user wants to view. As a result, it is possible to securely transmit content data coded with a code rate corresponding to the determined communication bandwidth.

In the modified example 1, the portal server 8 is configured to be capable of transmitting and receiving information to and from the service control server 5 via the connection control server 3, but may be configured to be capable of transmitting and receiving information to and from the service control server 5 not via the connection control server 3.

Further, in the modified example 1, each of the user equipment 2a, 2b... is configured to transmit a bandwidth determination request including content identification information, but may be configured to transmit a bandwidth determination request including data identification information. In this case, the content distribution system 1 is configured so that the portal server 8 transmits a content information transmission request including the data identification information included in the bandwidth determination request to the service control server 5 and the service control server 5 acquires content identification information stored in association with the data identification information included in the received content information trans mission request.

### <Modified Example 2 of First Exemplary Embodiment>

Next, a content distribution system according to a modified example 2 of the first exemplary embodiment of the present invention will be described. The content distribution system according to the modified example 2 is different from the content distribution system according to the first exemplary embodiment in determining a communication, bandwidth based on equipment attribute information and available band information. Available band information is information representing a communication bandwidth that can be used between the media server 6 and each of the user equipment 2a, 2b...
A described will be made below focusing on the different point.

The portal server 8 in the modified example 2 is configured to be capable of transmitting and receiving information to and from the service control server 5 via the connection control server 3 by transmitting and receiving SIP messages in the same manner as the portal server 8 in the modified example 1.

### (Function)

A call connection control part (an available band information acquiring means) 31 is configured to acquire available band information representing a communication bandwidth that can be used between the media server 6 and each of the user equipment 2a, 2b...

To be specific, the call connection control part 31 transmits an available band information transmission instruction to instruct transmission of available band information, to the transport control server 4.
Upon reception of the available band information transmission instructions, the band guarantee part 41 transmits available band information to the connection control server 3.

The call connection control part 31 receives (acquires) the available band information transmitted by the transport control server 4. The call connection control part 31 receives an available band information transmission request transmitted by the portal server 8. An available band information transmission request is information representing a request for transmission of available band information. Upon reception of the available band information transmission request, the call connection control part 31 transmits the acquired available band information to the portal server 8.

When receiving a bandwidth determination request, the equipment attribute information, acquiring part 81 transmits an available band information transmission request to the connection control server 3. The equipment attribute information acquiring part 81 receives (acquires) the available band information transmitted by the connection control server 3 in response to the available band information transmission request.

The communication bandwidth transmitting part 82 determines a communication bandwidth based on the equipment attribute information and available band information that have been acquired by the equipment attribute information acquiring part 81. To be specific, the communication bandwidth transmitting part 82 determines a communication bandwidth that is equal to or less than a communication bandwidth (an available communication bandwidth) represented by the available band information.

According to the modified example 2, the portal server 8 can determines a communication bandwidth depending on an available communication bandwidth. Therefore, the portal server 8 can determine a smaller value as a communication bandwidth when an available communication bandwidth is relatively small and, on the other hand, can determine a larger value as a communication bandwidth when an available communication bandwidth is relatively large. As a result, it is possible to avoid that content data cannot be transmitted due to shortage of a communication bandwidth.

### <Modified Example 3 of First Exemplary Embodiment>

Next, a content distribution system according to a modified example 3 of the first exemplary embodiment of the present invention will be described. The content distribution system according to the modified example 3 is different from the content distribution system according to the first exemplary embodiment in being configured to select (determine) a communication bandwidth based on equipment attribute information and processing load information. Processing load information is information representing a processing load on the media server 6.
A description will be made below focusing on the different point.

The portal server 8 in the modified example 3 is configured to be capable of transmitting and receiving information to and from the service control server 5 via the connection control server 3 by transmitting and receiving SIP messages, in the same manner as the portal server 8 in the modified example 1.

### (Function)

The information transmitting and receiving part (a processing load information, acquiring means) 61 is configured to acquire processing load information representing a processing load on the media server 6. In this exemplary embodiment, processing load information represents a CPU utilization rate, which is the ratio of an actual value to an upper limit value of the number of calculations executed by the CPU per unit time. Processing load information may be information representing, for example, the amount of data stored in the memory (the used capacity of the memory), or a memory utilization rate as the ratio of the "amount of stored data," to the "full capacity" of the memory.

The information transmitting and receiving part 61 receives a processing load information transmission request transmitted by the portal server 8. A processing load information transmission request is information representing a request for transmission of processing load information. Upon reception of the processing load information transmission request, the information transmitting and receiving part 61 transmits the acquired processing load information to the portal server 8 via the connection control server 3.

When receiving a bandwidth determination request, the equipment attribute information acquiring part 81 transmits a processing load information transmission request to the media server 6 via the connection control server 3. The equipment attribute information acquiring part 81 receives (acquires) processing load information transmitted by the media server 6 in response to the processing load information transmission request.

The communication bandwidth transmitting part 82 determines a communication bandwidth based on the equipment attribute information and processing load information that have been acquired by the equipment attribute information acquiring part 81. To be specific, the communication bandwidth transmitting part 82 selects a communication bandwidth that is equal to or less than a communication bandwidth preliminarily set depending on a processing load represented by the processing load information.

According to the modified example 3, the portal server 8 can determine a communication bandwidth depending on a processing load on the media server 6. Therefore, the portal server 8 can determine a smaller value as a communication, bandwidth when the processing load is relatively large and, on the other hand, determine a larger value as a communication bandwidth when the processing load is relatively small. As a result, it is possible to avoid that the processing load on the media server 6 becomes extremely large and consequently content data cannot be transmitted.

In another modified example of the first exemplary embodiment, the portal server 8 may be configured to select (determine) a communication bandwidth based on any combination of content identification information, available band information and processing load information and based on equipment attribute information.

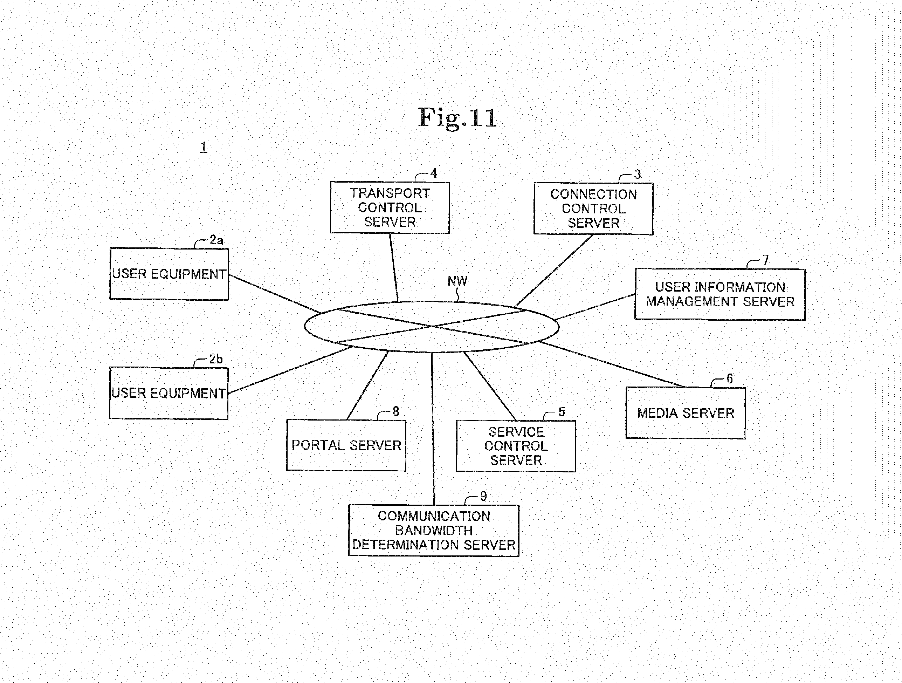

Further, in another modified example of the first exemplary embodiment, the content distribution system 1 may include a communication bandwidth determination server 9 configured to be capable of communicating with the user equipment 2a, 2b... as shown in Fig. 11. In this case, instead of the portal server 8, a function of the communication bandwidth determination server 9 includes the equipment attribute information acquiring part 81 and the communication bandwidth transmitting part 82.

### <Secon Exemplary Embodiment>

Next, a content distribution system according to a second exemplary embodiment of the present invention will be described. The content distribution system according to the second exemplary embodiment is different from the content distribution system according to the first exemplary embodiment in that the service control server 5 is configured to determine a communication bandwidth. Therefore, a description will be made below focusing on the different point.

### (Function)

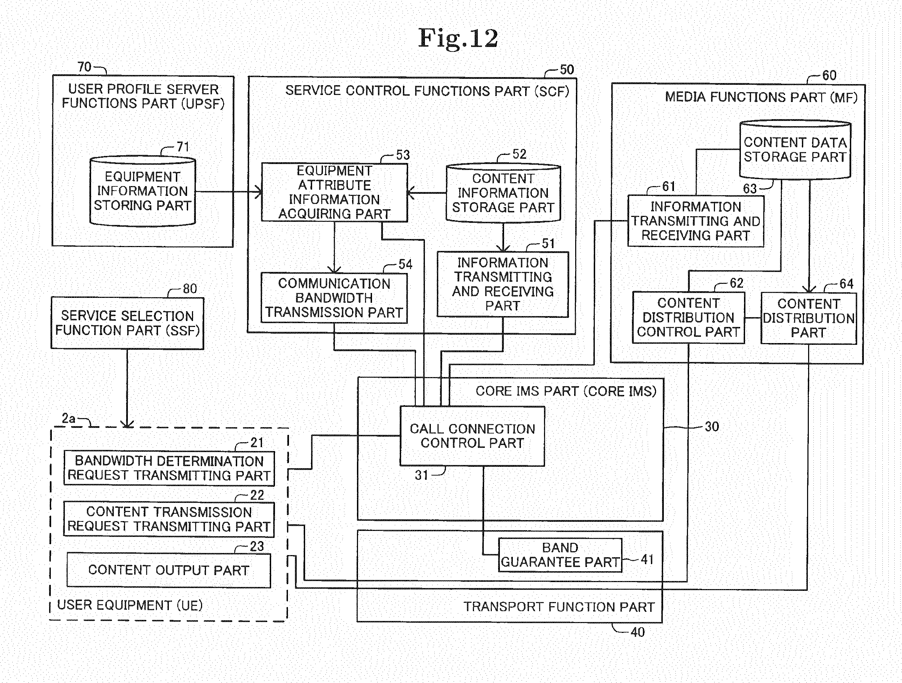

Fig. 12 is a block diagram showing a function of the content distribution system 1 according to the second exemplary embodiment.

The user profile server functions part 70 receives an equipment information transmission request from the service control server 5. An equipment information transmission request is information that includes equipment identification information and represents a request for transmission of equipment attribute information. Upon reception of the equipment information transmission request, the user profile server functions part 70 transmits equipment attribute information stored in the equipment information storing part 71 in association with the equipment identification information included in the equipment information transmission request, to the service control server 5.

The service control functions part 50 includes, in addition to the information transmitting and receiving part 51 and the content information storage part 52, an equipment attribute information acquiring part 53 like the equipment attribute information acquiring part 81 1 and a communication bandwidth transmitting part 54 like the communication bandwidth transmitting part 82.

The content information storage part 52 preliminarily stores content identification information and content attribute information in association with each other as shown in Fig. 9 in the same manner as in the modified example 1 of the first exemplary embodiment.

Further, when accepting a bandwidth determination request transmission instruction, the bandwidth determination request transmitting part 21 transmits a bandwidth determination request that includes equipment identification information stored in the storage device and content identification information included in the bandwidth determination request transmission instructions, to the service control server 5 via the connection control server 3.

The equipment attribute information acquiring part 53 receives the bandwidth determination request transmitted by the user equipment 2a. Upon reception of the bandwidth determination request, the equipment attribute information acquiring part 53 transmits an equipment information transmission request that includes the equipment identification information included in the received bandwidth determination request, to the user information management server 7. The equipment attribute information acquiring part 53 receives (acquires) equipment attribute information transmitted by the user information management server 7 in response to the equipment information transmission request. Thus, the equipment attribute information acquiring part 53 acquires the equipment attribute information stored in the equipment information storing part 71 in association with the equipment identification information included in the received bandwidth determination request.

Further, upon reception of the bandwidth determination request, the equipment attribute information acquiring part 53 acquires content attribute information stored in the content information storage part 52 in association with the content identification information included in the received bandwidth determination request.

In the same manner as in the modified example 1 of the first exemplary embodiment, the communication bandwidth transmitting part 54 determines a communication bandwidth and data identification information based on the equipment attribute information and content attribute information that have been acquired by the equipment attribute information acquiring part 53. Then, the communication bandwidth transmitting part 54 transmits the determined communication bandwidth and data identification information to the user equipment 2a via the connection control server 3.

The content transmission request transmitting part 22 receives the communication bandwidth and data identification information transmitted by the service control server 5. Upon reception of the communication bandwidth and the data identification information, the content transmission request transmitting part 22 transmits a content transmission request that includes the received communication bandwidth and data identification information and that requests transmission of content data, to the connection control server 3 in compliance with SIP.

### (Operation)

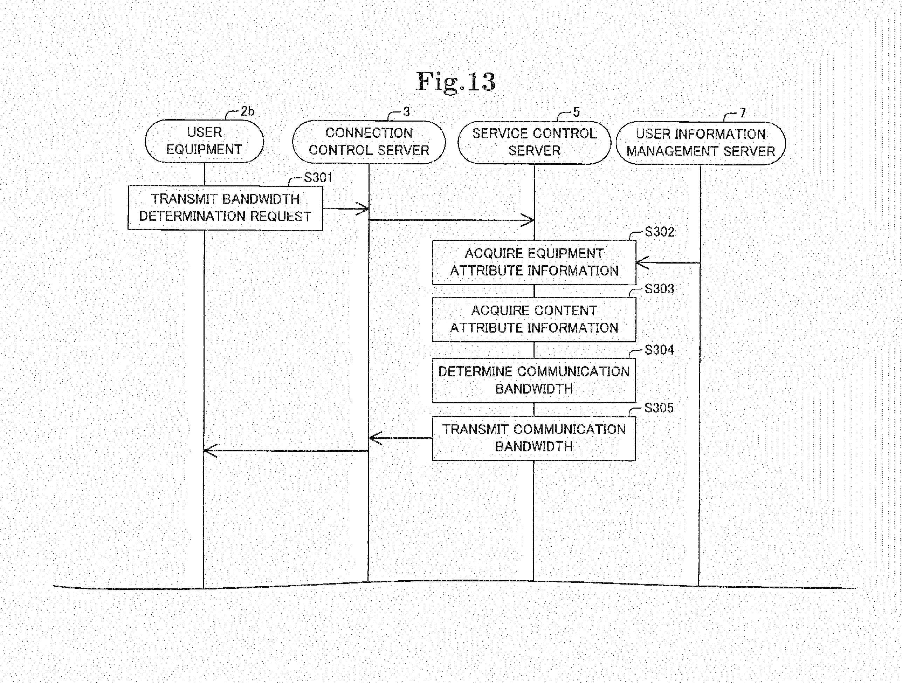

Next, an operation according to the present invention of the content distribution system 1 configured as described above will be explained with reference to a sequence diagram of Fig. 13. Herein, the same situation as the situation of the operation according to the first exemplary embodiment will be simulated. Therefore, an explanation will be made focusing on a different point from the operation of the content distribution system 1 according to the first exemplary embodiment, in the operation of the content distribution system 1 according to the second exemplary embodiment.

When the user equipment 2b accepts a bandwidth determination request transmission instruction, the user equipment 2b transmits a bandwidth determination request that includes equipment identification information stored in the storage device and content identification information included in the bandwidth determination request transmission instruction, to the service control server 5 via the connection control server 3 (step S301 of Fig. 13). In this exemplary embodiment, a bandwidth determination request is transmitted as an INFO message (a message with "INFO" set as a method)) among SIP messages.

Upon reception of the bandwidth determination request, the service control server 5 transmits an equipment information transmission request that includes the equipment identification information included in the received bandwidth determination request, to the user information management server 7. Consequently, the service control server 5 acquires equipment attribute information (resolution information "720x480" and ability level information "2") stored in the user information management server 7 in association with the received equipment identification information ("mobile") (step S302 of Fig. 13).

Next, the service control server 5 acquires content attribute information stored in association with content identification information. ("content111") included in the received bandwidth determination request (step S303 of Fig. 13).

Then, the service control server 5 determines a communication bandwidth, based on the acquired equipment attribute information and content attribute information. To be specific, the service control server 5 selects content attribute information that includes the resolution information included in the acquired equipment attribute information, minimum level information representing a value equal to or less than the ability level information included in the equipment attribute information and maximum level information representing a value equal to or more than the ability level information included in the equipment attribute information.

Then, the service control server 5 acquires (determines) a communication bandwidth ("4Mbps") and data identification information ("data1113") that are included in the selected content attribute information (step S304 of Fig. 13). Next, the service control server 5 transmits the determined communication bandwidth and data identification information to the user equipment 2b (step S305 of Fig. 13).

Then, the user equipment 2b transmits a content transmission request that includes the received communication bandwidth ("4Mbps") and the received data identification information ("data113"), to the connection control server 3 (step S 105 of Fig. 6).
After that, the content distribution system 1 operates in the same manner as in the first exemplary embodiment.

As described above, the second exemplary embodiment of the content distribution system according to the present invention can also produce the same actions and effects as the first exemplary embodiment.
Further, in the second exemplary embodiment, the content distribution system 1 determines a communication bandwidth based on content identification information and equipment attribute information.

Accordingly, it is possible to determine a value corresponding to a code rate of content data that the media server 6 can transmit among content data representing content that the user wants to view, as a communication bandwidth. As a result, the media server 6 can securely transmit the content data coded with the code rate corresponding to the determined communication bandwidth.

In a modified example of the second exemplary embodiment, the service control server 5 may be configured to select (determine) a communication band based on any combination of content identification information, available band information and processing load information and based on equipment attribute information.

Further, in the second exemplary embodiment, each of the user equipment 2a, 2b... is configured to transmit a bandwidth determination request including content identification information, but may be configured to transmit a bandwidth determination request including data identification information. In this case, the content distribution system 1 is configured so that the service control server 5 acquires content identification information stored in association with data identification information included in a received bandwidth determination request.

### <Modified Example 1 of Second Exemplary Embodiment>

Next, a content distribution system according to a modified example 1 of the second exemplary embodiment of the present invention will be described. The content distribution system according to the modified example 1 is different from the content distribution system according to the second exemplary embodiment in being configured to establish a connection (a control connection) for performing communication compliant with RTSP and thereafter establish a connection (a content connection) for performing communication compliant with RTP. Therefore, a description will be made below focusing on the different point.

### (Function)

When accepting a bandwidth determination request transmission instruction, the bandwidth determination request transmitting part 21 transmits, as a control connection request, a bandwidth determination request that includes equipment identification information stored in the storage device and content identification information included in the bandwidth determination request transmission instructions, to the connection control server 3. A control connection request is information representing a request for establishment of a connection (a control connection) for performing communication compliant with RTSP.

A control connection is a connection used for transmission and reception of control information between the media server 6 and the user equipment 2b.
In this exemplary embodiment, a control connection request is transmitted as an INVITE message among SIP messages. In this exemplary embodiment, a control connection request includes a preliminarily set communication bandwidth.

Upon reception of the control connection request from the user equipment 2b, the call connection control part 31 generates a band reservation instruction of instructing reservation of a communication band between the media server 6 and the user equipment 2a. A band reservation instruction includes the communication bandwidth included in the control connection request.

When receiving a reservation process response transmitted from the transport control server 4 in response to the band reservation instruction, the call connection control part 31 transmits (transfers) the control connection request received from the user equipment 2a, to the service control server 5.

Further, when receiving a connection permission notice from the service control server 5, the call connection control part 31 generates a band fixation instruction of instructing to fix (commit) the reserved communication band. The call connection control part 31 transmits the generated band fixation instruction to the transport control server 4.

When receiving a fixation process response transmitted from the transport control server 4 in response to the band fixation instruction, the call connection control part 31 transmits (transfers) the connection permission notice, received from the service control server 5, to the user equipment 2a.

Thus, the connection control server 3 and the transport control server 4 receive a control connection request from the user equipment 2a, and establish a connection between the media server 6 and the user equipment 2a having a communication bandwidth included in the received control connection request.

The equipment attribute information acquiring part 53 receives the control connection request transmitted by the user equipment 2a. Upon reception of the control connection request, the equipment attribute information acquiring part 53 transmits an equipment information transmission request including the equipment identification information included in the received control connection request, to the user information management server 7. The equipment attribute information acquiring part 53 receives (acquires) equipment attribute information transmitted by the user information management server 7 in response to the equipment information transmission request. Thus, the equipment attribute information acquiring part 53 acquires the equipment attribute information stored in the equipment information storing part 71 1 in association with the equipment identification information included in the received bandwidth determination request.

Further, upon reception of the control connection request, the equipment attribute information acquiring part 53 acquires content attribute information stored in the content information storage part 52 in association with the content identification information included in the received control connection request.

In the same manner as in the second exemplary embodiment, the communication bandwidth transmitting part 54 determines a communication bandwidth and data identification information based on the equipment attribute information and the content attribute information that have been acquired by the equipment attribute information acquiring part 53. Then, the communication bandwidth transmitting part 54 adds the determined communication bandwidth and data identification information to the received control connection request.

When the communication bandwidth and the data identification information are determined by the communication bandwidth transmitting part 54, the information transmitting and receiving part 51 selects a media server (in this exemplary embodiment, the media server 6) identified by server identification information stored in the content information storage part 52 in association with the determined data identification information.

The communication bandwidth transmitting part 54 transmits (transfers) the control connection request that the determined communication bandwidth and data identification information have been added, to the media server 6 selected by the information transmitting and receiving part 51 via the connection control server 3.

Upon reception of the control connection request, the information transmitting and receiving part 61 transmits an SIP message as a connection permission notice to the service control server 5 via the connection control server 3. A connection permission notice is response information for instructing a communication relay device, which configures the reserved communication band and relays communication, to fix the communication band. A connection permission notice includes the data identification information included in the control connection request.

In this exemplary embodiment, a connection permission notice is transmitted as an OK message (a response including a status code "200" and "OK" in an initial line) among SIP messages.

Further, upon reception of the connection permission notice transmitted by the media server 6, the information transmitting and receiving part 51 transmits the received connection permission notice to the connection control server 3.

The content output part 23 receives the connection permission notice (the response information) from the connection control server 3. Upon reception of the connection permission notice, the content output part 23 transmits a detailed information transmission request that includes the data identification information included in the received connection permission notice, to the media server 6 by using the established control connection. A detailed information transmission request is information representing a request for transmission of detailed information including a communication bandwidth necessary for transmission of content data.

In this exemplary embodiment, a detailed information transmission request is transmitted as a DESCRIBE message (a message with "DESCRIBE" set as a method) among RTSP messages (messages compliant with RTSP).

The content distribution control part 62 receives the detailed information transmission request from the user equipment 2a. Upon reception of the detailed information transmission request, the content distribution control part 62 transmits detailed information including a communication bandwidth necessary for transmitting content data identified by the data identification information included in the received detailed information transmission request, to the user equipment 2a by using the established control connection.

The content output part 23 receives the detailed information transmitted by the media server 6 in response to the detailed information transmission request.
When the detailed information is received by the content output part 23, the content transmission request transmitting part 22 transmits a content transmission request that includes the communication bandwidth included in the received detailed information and the data identification information included in the received connection permission notice, to the connection control server 3 in compliance with SIP.

Thus, the user equipment 2a is configured to transmit the bandwidth determination request to the application server system before transmission of the content transmission request.

### (Operation)

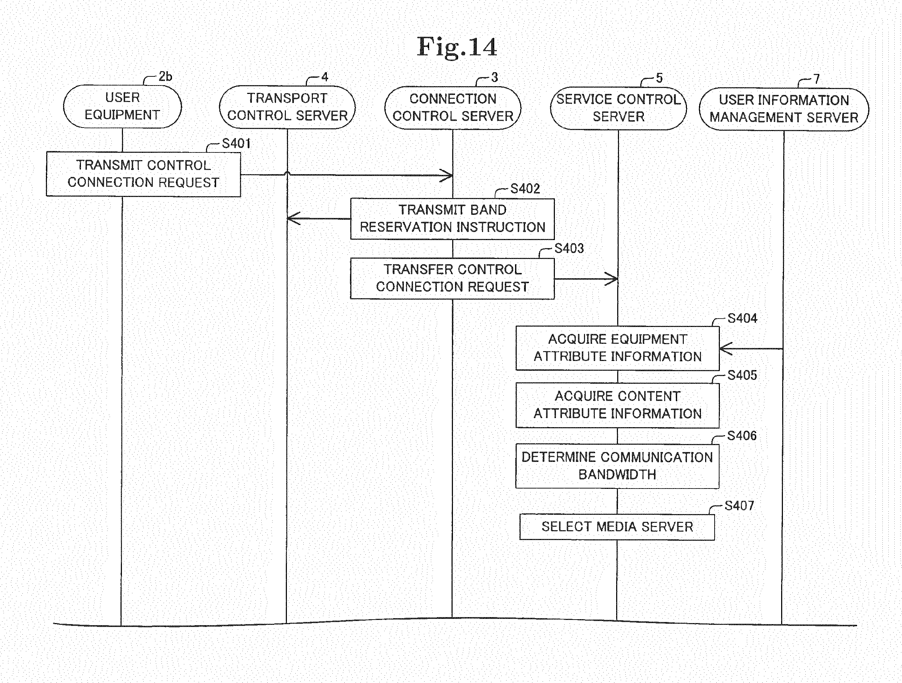

Next, an operation according to the present invention of the content distribution system configured as described above will be explained with reference to Figs. 14 to 17. Herein, the same situation as the situation of the operation according to the first exemplary embodiment will be simulated. Therefore, an explanation will be made focusing on a different point from the operation of the content distribution system 1 according to the first exemplary embodiment, in the operation of the content distribution system 1 according to the modified example 1.

When the user equipment 2b accepts a bandwidth determination request transmission instruction, the user equipment 2b transmits a control connection request as a bandwidth determination request that includes equipment identification information stored in the storage device and content identification information included in the bandwidth determination request transmission instructions, to the connection control server 3 (step S401 of Fig. 14). In this exemplary embodiment, a control connection request is transmitted as an INVITE message (a message with "INVITE" set as a method) among SIP messages.

Upon reception of the control connection request, the connection control server 3 transmits a band reservation instruction of instructing reservation of a communication band between the media server 6 and the user equipment 2b, to the transport control server 4 (step S402 of Fig. 14).

Consequently, the transport control server 4 executes a band reservation process of reserving a communication band that is other than a communication band represented by stored used communication band information and that has a communication bandwidth included in the band reservation instruction.

Next, the connection control server 3 transfers the control connection request received from the user equipment 2b to the service control server 5 (step S403 of Fig. 14).

Consequently, the service control server 5 receives the control connection request. Then, the service control server 5 transmits an equipment information transmission request that includes the equipment identification information included in the control connection request (the bandwidth determination request) having been received, to the user information management server 7. Thus, the service control server 5 acquires equipment attribute information (resolution information "720×480" and ability level information "2") stored in the user information management server 7 in association with the received equipment identification information ("Mobilel") (step S404 of Fig. 14).

Next, the service control server 5 acquires content attribute information stored in association with the content identification information ("contentlll") included in the received control connection request (step S405 of Fig. 14).

Then, the service control server 5 determines a communication bandwidth, based on the acquired equipment attribute information and content attribute information. To be specific, the service control server 5 selects content attribute information that includes the resolution information included in the acquired equipment attribute information, minimum level information representing a value equal to or less than the ability level information included in the equipment attribute information and maximum level information representing a value equal to or more than the ability level information included in the equipment attribute information.

Then, the service control server 5 acquires (determines) a communication bandwidth ("4Mbps") and data identification information ("datalll3") that are included in the selected content attribute information (step S406 of Fig. 14).

Next, the service control server 5 selects a media server (in this exemplary embodiment, the media server 6) identified by server identification information stored in association with the determined data identification information (step S407 of Fig. 14).

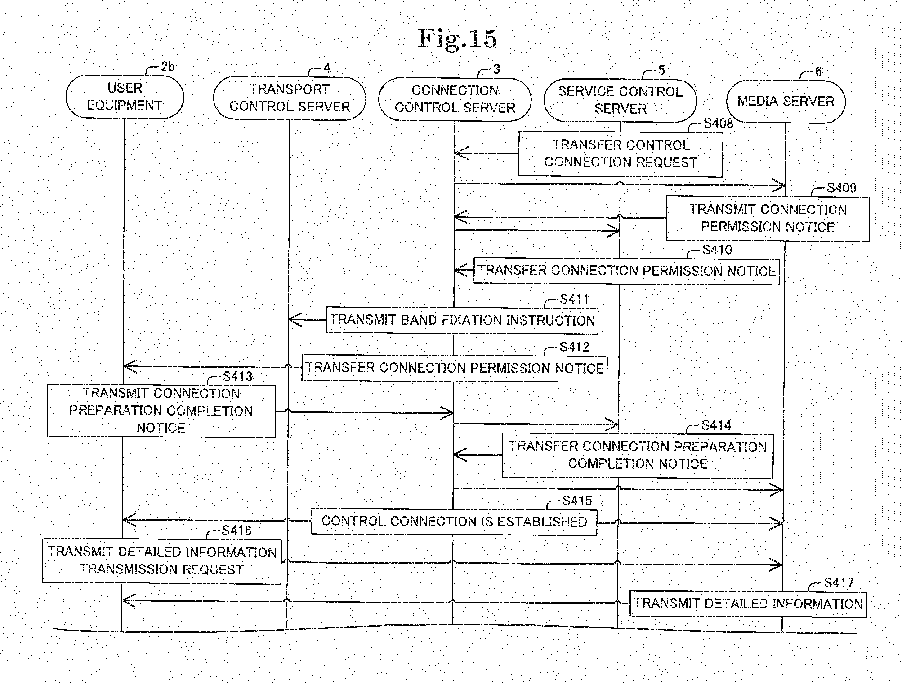

Next, the service control server 5 adds the determined communication bandwidth and data identification information to the received control connection request. Then, the service control server 5 transmits (transfers) the control connection request that the determined communication bandwidth and data identification information have been added, to the selected media server 6 via the connection control server 3 (step S408 of Fig. 15).

Then, upon reception of the control connection request, the media server 6 transmits an SIP message as a connection permission notice including the data identification information included in the received control connection request, to the service control server 5 via the connection control server 3 (step S409 of Fig. 15).

Next, upon reception of the connection permission notice transmitted by the media server 6, the service control server 5 transmits the received connection permission notice to the connection control server 3 (step S41 0 of Fig. 15).

Next, upon reception of the connection permission notice from the service control server 5, the connection control server 3 transmits a band fixation instruction of instructing to fix (commit) the reserved communication band, to the transport control server 4 (step S411 of Fig. 15).

Thus, the transport control server 4 executes a band fixation process of instructing a communication relay device, which configures a communication band (i.e., the reserved communication band) specified by communication band specification information included in the band fixation instruction among communication bands represented by the stored used communication band information and relays communication, to fix the communication band. As a result, the communication relay device executes a packet priority control, and so on.

Next, the connection control server 3 transfers the connection permission notice received from the service control server 5, to the user equipment 2b (step S412 of Fig. 15).
Then, upon reception of the connection permission notice from the connection control server 3, the user equipment 2b transmits a connection preparation completion notice to the service control server 5 via the connection control server 3 (step S413 of Fig. 15). A connection preparation notice is information representing that preparation for establishing connection has been completed.

Next, upon reception of the connection preparation completion notice, the service control server 5 transfers the received connection preparation completion notice to the media server 6 via the connection control server 3 (step S414 of Fig. 15).

Consequently, a connection between the user equipment 2b and the media server 6, which is a connection (a control connection) having the communication bandwidth included in the control connection request, is established (step S415 of Fig. 15). In this exemplary embodiment, as the control connection, a connection for performing communication compliant with RTSP is established. In this exemplary embodiment, a connection for performing communication compliant with RTSP is a connection used for transmitting and receiving control information between the media server 6 and the user equipment 2b.

After that, the user equipment 2b transmits a detailed information transmission request including the data identification information included in the received connection permission notice, to the media server 6 in compliance with RTSP (step S416 of Fig. 15).

Thus, the media server 6 receives the detailed information transmission request from the user equipment 2b. Then, the media server 6 transmits detailed information including a communication bandwidth stored in association with the data identification information included in the received detailed information transmission request, to the user equipment 2b (step S417 of Fig.15).

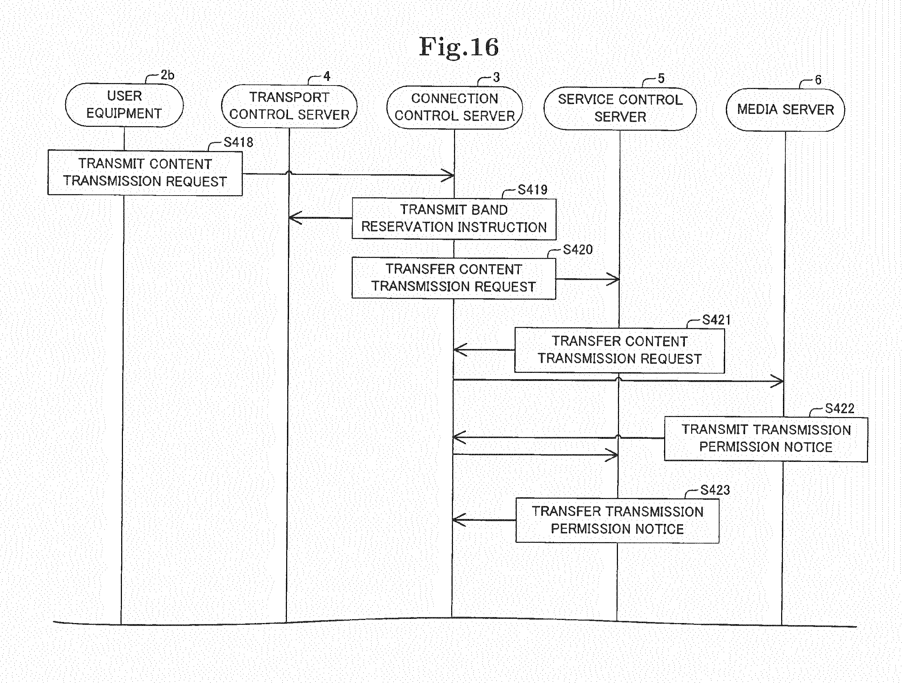

Thus, the user equipment 2b receives the detailed information transmitted by the media server 6 in response to the detailed information transmission request. Next, the user equipment 2b transmits a content transmission request that includes the communication bandwidth included in the received detailed information and the data identification information included in the received connection permission notice, to the connection control server 3 in compliance with SIP (step S418 of Fig. 16). In this exemplary embodiment, a content transmission request is transmitted as a re-INVITE message (a message with "re-INVITE" set as a method) among SIP messages.

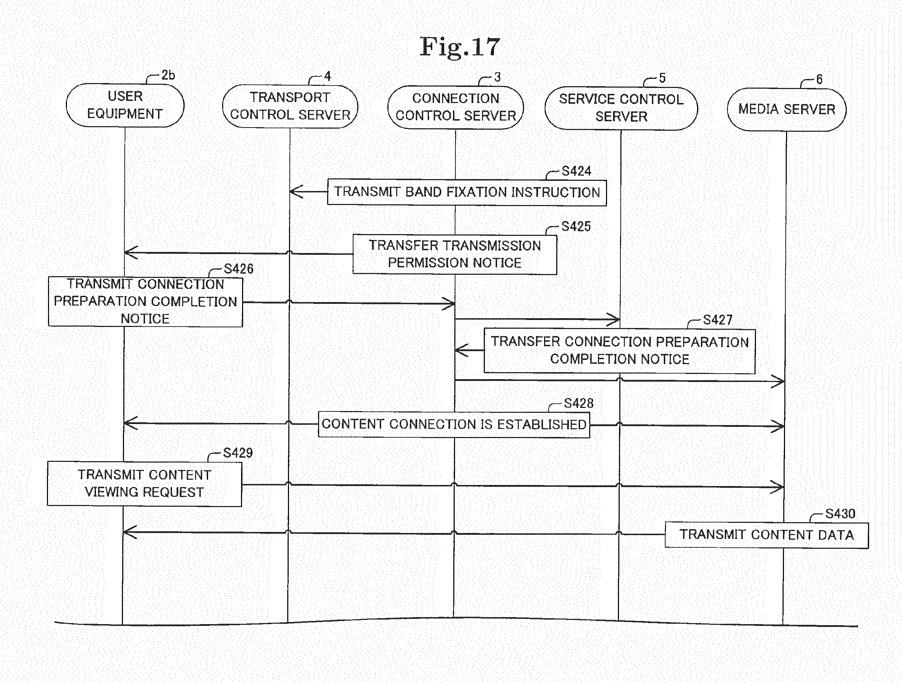

After that, the content distribution system 1 executes processes from step S419 of Fig. 16 to step S427 of Fig. 17, in the same manner as executing the processes from step S106 of Fig. 6 to step S115 of Fig. 7. Since the service control server 5 has already selected a media server at step S407, the service control server 5 does not execute a process like the process of step S 108 of Fig. 6.

Consequently, a connection between the user equipment 2b and the media server 6, which is a connection (a content connection) having a communication bandwidth ("4Mbps") included in the content transmission request, is established (step S428 of Fig. 17). In this exemplary embodiment, as the content connection, a connection for performing communication compliant with RTP is established.

In this exemplary embodiment, a connection for performing communication compliant with RTP is a connection used for transmitting content data from the media server 6 to the user equipment 2b. Therefore, the content transmission request transmitted by the user equipment 2b at step S418 of Fig. 16 is a content transmission request for establishing a connection used for receiving content data.

Thus, in this exemplary embodiment, the user equipment 2b transmits a control connection request (a bandwidth determination request) to the application server system before transmission of a content transmission request.

After that, the user equipment 2b transmits a content viewing request including data identification information to the media server 6. Moreover, the user equipment 2b transmits a reproduction start request to the media server 6 in compliance with a specified communication protocol (in this exemplary embodiment, RTSP) (step S429 of Fig. 17).

Thus, the media server 6 transmits content data identified by the data identification information included in the received content viewing request, among the content data stored in the content data storage part 63, to the user equipment 2b (step S430 of Fig. 17). At this moment, the media server 6 transmits data in compliance with RTP by using the content connection (the session) established by the connection control system.

Thus, the user equipment 2b receives the content data from the media server 6. The user equipment 2b outputs content represented by the received content data, via the output device.

As described above, the modified example 1 of the second exemplary embodiment of the content distribution system according to the present invention can also produce the same actions and affects as the second exemplary embodiment.

In the content distribution system according to the modified example 1, the media server 6 may be configured to transmit a connection permission notice including the communication bandwidth and the data identification information included in the received control connection request, to the user equipment 2b via the connection control server 3 and the service control server 5. In this case, it is preferred that the content distribution system 1 is configured to execute a process excluding the processes of step 416 and step at 417.

### <Third Exemplary Embodiment>

Next, a content distribution system according to a third exemplary embodiment of the present invention will be described. The content distribution system according to the third exemplary embodiment is different from the content distribution system according to the first exemplary embodiment in that the media server 6 is configured to determine a communication bandwidth and a connection (a content connection) for performing communication compliant with RTP is established after a connection (a control connection) for performing communication compliant with RTSP is established. Therefore, a description will be made below focusing on the different point.

### (Function)

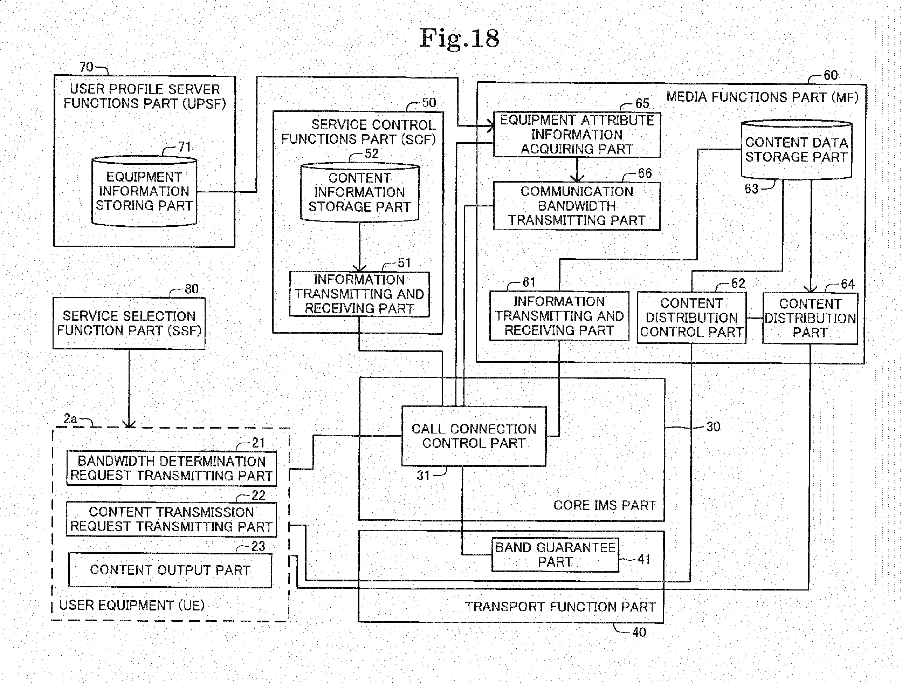

Fig. 18 is a block diagram showing a function of the content distribution system 1 according to the third exemplary embodiment.

The user profile server functions part 70 receives an equipment information transmission request from the media server 6. An equipment information transmission request is information that includes equipment identification information and represents a request for transmission of equipment attribute information. Upon reception of the equipment information transmission request, the user profile server functions part 70 transmits equipment attribute information stored in the equipment information storing part 71 in association with the equipment identification information included in the equipment information transmission request, to the media server 6.

The media server 6 and the user information management server 7 may be configured to be capable of transmitting and receiving information to and from each other via the connection control server 3.

The content information storage part 52 preliminarily stores content identification information and content attribute information in association with each other as shown in Fig. 9 in the same manner as in the modified example 1 of the first exemplary embodiment.

The information transmitting and receiving part 51 receives a content information transmission request transmitted by the media server 6, from the connection control server 3. A content information transmission request is information including content identification information and representing a request for transmission of content attribute information. Upon reception of the content information transmission request, the information transmitting and receiving part 51 extracts content attribute information stored in the content information storage part 52 in association with the content identification information included in the received content information transmission request.

The information transmitting and receiving part 51 transmits the extracted content attribute information to the media server 6 via the connection control server 3.

When accepting a bandwidth determination request transmission instructions, the bandwidth determination request transmitting part 21 transmits a control connection request including content identification information included in the bandwidth determination request transmission instructions, to the connection control server 3. A control connection request is information representing a request for establishment of a connection (a control connection) for performing communication in compliance with RTSP.

A control connection is a connection used for transmission and reception of control information between the media server 6 and the user equipment 2b.
In this exemplary embodiment, a control connection request is transmitted as an INVITE message among SIP messages. In this exemplary embodiment, a control connection request includes a preset communication bandwidth.

Upon reception of the control connection request from the user equipment 2a, the call connection control part 31 generates a band reservation instruction of instructing reservation of a communication band between the media server 6 and the user equipment 2a. A band reservation instruction includes the communication bandwidth included in the control connection request.

When receiving a reservation process response transmitted from the transport control server 4 in response to the band reservation instructions, the call connection control part 31 1 transmits (transfers) the control connection request received from the user equipment 2a, to the service control server 5.

Further, when receiving a connection permission notice from the service control server 5, the call connection control part 31 generates a band fixation instruction of instructing to fix (commit) the reserved communication band. The call connection control part 31 transmits the generated band fixation instruction to the transport control server 4.

When receiving a fixation process response transmitted from the transport control server 4 in response to the band fixation instructions, the call connection control part 31 transmits (transfers) the connection permission notice received from the service control server 5, to the user equipment 2a.

Thus, the connection control server 3 and the transport control server 4 receive the control connection request from the user equipment 2a, and establish a connection between the media server 6 and the user equipment 2a having the communication bandwidth included in the received control connection request.

Upon reception of the control connection request from the connection control server 3, the information transmitting and receiving part 51 specifies data identification information for identifying content data representing content identified by the content identification information included in the received control connection request. The information transmitting and receiving part 51 selects a media server (in this exemplary embodiment, the media server 6) identified by server identification information stored in the content information storage part 52 in association with the specified data identification information.

The information transmitting and receiving part 51 transmits (transfers) the received control connection request to the selected media server 6 via the connection control server 3.

Upon reception of the control connection request, the information transmitting and receiving part 61 transmits an SIP message as a connection permission notice, to the service control server 5 via the connection control server 3. A connection permission notice is response information for instructing a communication relay device, which configures the reserved communication band and relays communication, to establish the communication band. The connection permission notice includes the content identification information included in the control connection request.

In this exemplary embodiment, the connection permission notice is transmitted as an OK message (a response including a status code "200" and "OK" in an initial line) among SIP messages.

Further, upon reception of the connection permission notice transmitted by the media server 6, the information transmitting and receiving part 51 transmits the received connection permission notice to the connection control server 3.

The content output part 23 receives the connection permission notice (the response information) from the connection control server 3. Upon reception of the connection permission notice, the content output part 23 transmits a bandwidth determination request that includes the content identification information included in the received connection permission notice and the equipment identification information stored in the storages device, as a detailed information transmission request, to the media server 6 by using the established control connection. A detailed information transmission request is information representing a request for transmission of detailed information including a communication bandwidth necessary for transmission of content data.

In this exemplary embodiment, a detailed information transmission request is transmitted as a DESCRIBE message (a message with "DESCRIBE" set as a method) among RTSP messages (messages compliant with RTSP).

An equipment attribute information acquiring part 65 receives the detailed information transmission request transmitted by the user equipment 2a. Upon reception of the detailed information transmission request, the equipment attribute information acquiring part 65 transmits an equipment information transmission request including the equipment identification information included in the detailed information transmission request having been received, to the user information management server 7. The equipment attribute information acquiring part 65 receives (acquires) equipment attribute information transmitted by the user information management server 7 in response to the equipment information transmission request. Consequently, the equipment attribute information acquiring part 65 acquires equipment attribute information stored in the equipment information storing part 71 in association with the equipment identification information included in the detailed information transmission request having been received.

Further, upon reception of the detailed information transmission request, the equipment attribute information acquiring part 65 transmits a content information transmission request that includes the content identification information included in the detailed information transmission request having been received, to the service control server 5 via the connection control server 3. The equipment attribute information acquiring part 65 receives (acquires) content attribute information transmitted by the service control server 5 in response to the content information transmission request.

A communication bandwidth transmitting part 66 determines a communication bandwidth and data identification information based on the equipment attribute information and content attribute information having been acquired by the equipment attribute information acquiring part 65, in the same manner as in the second exemplary embodiment. Then, the communication bandwidth transmitting part 66 transmits detailed information that includes the communication bandwidth and data identification information having been determined, to the user equipment 2a by using the established control connection.

The content output part 23 receives the detailed information transmitted by the media server 6 in response to the detailed information transmission request.
When the detailed information is received by the content output part 23, the content transmission request transmitting part 22 transmits a content transmission request including the communication bandwidth and the data identification information that are included in the received detailed information, to the connection control server 3 in compliance with SIP.

Thus, the user equipment 2a is configured to transmit a bandwidth determination request to the application server system before transmission of a content transmission request.

### (Operation)

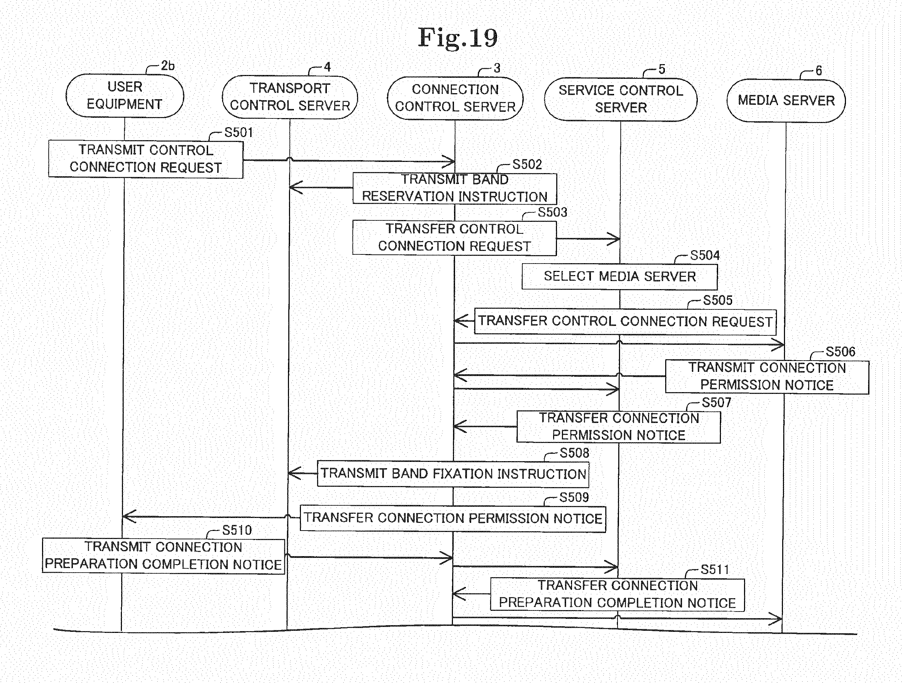

Next, an operation according to the present invention of the content distribution system 1 configured as described above will be explained with reference to sequence diagrams of Figs. 19 to 22. Herein, the same situation as the situation of the operation according to the first exemplary embodiment will be simulated. Therefore, an explanation will be made focusing on a different point from the operation of the content distribution system 1 according to the first exemplary embodiment, in the operation of the content distribution system 1 according to the third exemplary embodiment.

When the user equipment 2b accepts a bandwidth determination request transmission instruction, the user equipment 2b transmits a control connection request that includes content identification information included in the bandwidth determination request transmission instruction, to the connection control server 3 (step S501 of Fig. 19). In this exemplary embodiment, a control connection request is transmitted as an INVITE message (a message with "INVITE" set as a method) among SIP messages.

Upon reception of the control connection request, the connection control server 3 transmits a band reservation instruction of instructing reservation of a communication band between the media server 6 and the user equipment 2b, to the transport control sever 4 (step S502 of Fig. 19).

Consequently, the transport control server 4 executes a band reservation process of reserving a communication band that is other than a communication band represented by stored used communication band information and that has a communication bandwidth included in the band reservation instruction.

Next, the connection control server 3 transfers the control connection request received from the user equipment 2b, to the service control server 5 (step S503 of Fig. 19).

Consequently, the service control server 5 receives the control connection request. Then, the service control server 5 specifies data identification information for identifying content data representing content identified by the content identification information included in the received control connection request. Next, the service control server 5 selects a media server (in this exemplary embodiment, the media server 6) identified by server identification information stored in association with the specified data identification information (step S504 of Fig. 19).

Next, the service control server 5 transmits (transfers) the received control connection request to the selected media server 6 via the connection control server 3 (step S505 of Fig. 19).

Then, upon reception of the control connection request, the media server 6 transmits a SIP message as a connection permission notice including the content identification information included in the received control connection request, to the service control server 5 via the connection control server 3 (step S506 of Fig. 19).

Next, upon reception of the connection permission notice transmitted by the media server 6, the service control server 5 transmits the received connection permission notice to the connection control server 3 (step S507 of Fig. 19).

Next, upon reception of the connection permission notice from the service control server 5, the connection control server 3 transmits a band fixation instruction of instructing to fix (commit) the reserved communication band, to the transport control server 4 (step S508 of Fig. 19).

Consequently, the transport control server 4 executes a band fixation process of instructing a communication relay device, which configures a communication band (i.e., the reserved communication band) specified by communication band specification information included in the band fixation instruction and which relays communication, to fix the communication band. As a result, the communication relay device executes a packet priority control, and so on.

Next, the connection control server 3 transfers the connection permission notice received from the service control server 5, to the user equipment 2b (step S509 of Fig. 19).
Then, upon reception of the connection permission notice from the connection control server 3, the user equipment 2b transmits a connection preparation completion notice to the service control server 5 via the connection control server 3 (step S510 of Fig. 19). A connection preparation completion notice is information representing that preparation for establishment of a connection has been completed.

Next, upon reception of the connection preparation completion notice, the service control server 5 transfers the received connection preparation completion notice to the media server 6 via the connection control server 3 (step S511 of Fig. 19).

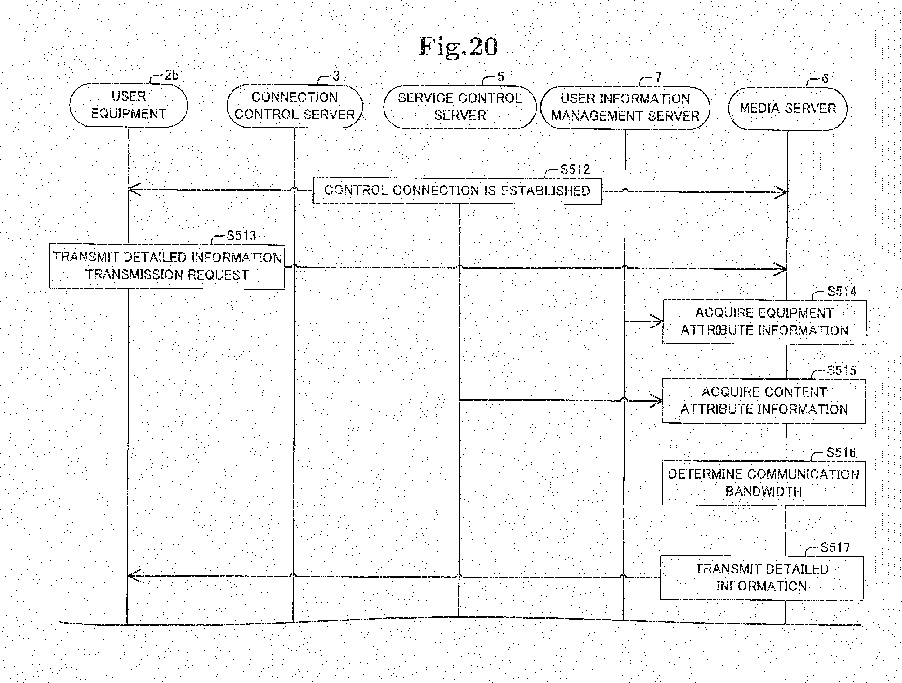

Thus, a connection between the user equipment 2b and the media server 6, which is a connection (a control connection) having a communication bandwidth included in the control connection request is established (step S512 of Fig. 20). In this exemplary embodiment, as the control connection, a connection for performing communication in compliance with RTSP is established. In this exemplary embodiment, a connection for performing communication in compliance with RTSP is a connection used for transmission and reception of control information between the media server 6 and the user equipment 2b.

After that, the user equipment 2b transmits a bandwidth determination request that includes the content identification information included in the received connection permission notice and the equipment identification information stored in the storage device, as a detailed information transmission request to the media server 6 in compliance with RTSP (step S513 of Fig. 20).

Thus, the media server 6 receives the detailed information transmission request from the user equipment 2b. Then, the media server 6 transmits an equipment information transmission request including the equipment identification information included in the detailed information transmission request (the bandwidth determination request) having been received, to the user information management server 7. Thus, the media server 6 acquires equipment attribute information (resolution information "720x480" and ability level information "2") stored in the user information management server 7 in association with the received equipment identification information ("Mobilel") (step S514 of Fig. 20).

Next, the media server 6 transmits a content information transmission request including content identification information ("content111") included in the detailed information transmission request having been received, to the service control server 5 via the connection control server 3. Thus, the media server 6 acquires content attribute information stored in the service control server 5 in association with the received content identification information ("content111") (step S515 of Fig. 20).

Then, the media server 6 determines a communication bandwidth based on the equipment attribute information and content attribute information that have been received. To be specific, the media server 6 selects content attribute information that includes the resolution information included in the acquired equipment attribute information, minimum level information representing a value equal to or less than the ability level information included in the equipment attribute information, and maximum level information representing a value equal to or more than the ability level information included in the equipment attribute information.

Then, the media server 6 acquires (determines) a communication bandwidth ("4Mbps") and data identification information ("data1113") that are included in the selected content attribute information (step S516 of Fig. 20).

Next, the media server 6 transmits detailed information including the communication bandwidth and data identification information that have been determined, to the user equipment 2b in compliance with RTSP (step S517 of Fig. 29).

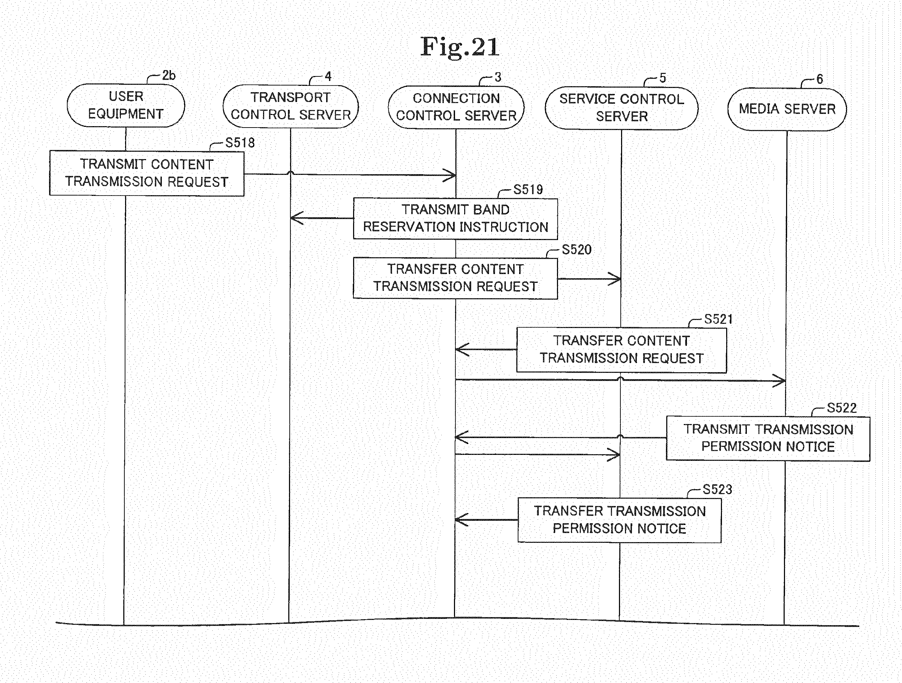

Thus, the user equipment 2b receives the detailed information transmitted by the media server 6 in response to the detailed information transmission request. Next, the user equipment 2b transmits a content transmission request including the communication bandwidth and data identification information that are included in the detailed information having been received, to the connection control server 3 in compliance with SIP (step S518 of Fig. 21). In this exemplary embodiment, a content transmission request is transmitted as a re-INVITE message (a message with "re-INVITE" set as a method) among SIP messages.

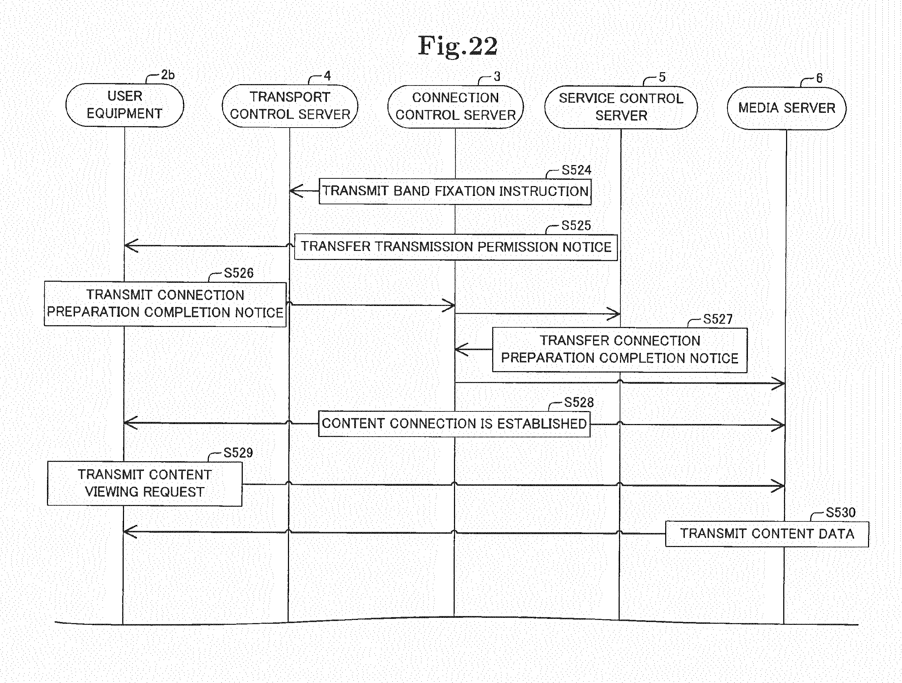

After that, the content distribution system 1 executes processes from step S519 of Fig. 21 to step S527 of Fig. 22, in the same manner as executing the processes from step S106 of Fig. 6 to step S 115 of Fig. 7. Since the service control server 5 has already selected a media server at step S504, the service control server 5 does not execute the same process as at step S108 of Fig. 6.

Thus, a connection between the user equipment 2b and the media server 6, which is a connection (a content connection) having the communication bandwidth (4Mbps") included in the content transmission request, is established (step S528 of Fig. 22). In this exemplary embodiment, as a content connection, a connection for performing communication in compliance with RTP is established.

In this exemplary embodiment, the connection for performing communication in compliance with RTP is a connection used for transmitting content data from the media server 6 to the user equipment 2b. Therefore, the content transmission request that the user equipment 2b transmits at step S518 of Fig. 21 is a content transmission request for establishing a connection used for receiving content data.

Thus, in the exemplary embodiment, the user equipment 2b transmits a detailed information transmission request (a bandwidth determination request) to the application server system before transmission of a content transmission request.

After that, the user equipment 2b transmits a content viewing request including the data identification information, to the media server 6. Moreover, the user equipment 2b transmits a reproduction start request to the media server 6 in compliance with a specified communication protocol (in this exemplary embodiment, RTP) (step S529 of Fig. 22).

Consequently, the media server 6 transmits content data identified by the data identification information included in the received content viewing request among content data stored in the content data storage part 63, to the user equipment 2b (step S530 of Fig. 22). At this moment, the media server 6 transmits data in compliance with RTP by using the content connection (the session) established by the connection control system.

Consequently, the user equipment 2b receives the content data from the media server 6. The user equipment 2b outputs content represented by the received content, via the output device.

As described above, the third exemplary embodiment of the content distribution system according to the present invention can also produce the same actions and effects as the second exemplary embodiment.

In the third exemplary embodiment, each of the user equipment 2a, 2b... is configured to transmit a detailed information transmission request including content identification information, but may be configured to transmit a detailed information transmission request including data identification information. In this case, the content distribution system 1 is configured so that the media server 6 transmits a content information transmission request including the data identification information included in the detailed information transmission request to the service control server 5 and the service control server 5 acquires the content identification information stored in association with the data identification information include in the received content information transmission request.

Further, the content distribution system 1 according to the third exemplary embodiment may be configured so that the user equipment transmits a control connection request that includes content identification information and equipment identification information and, upon reception of the control connection request, the media server 6 determines data identification information and a communication bandwidth based on the content identification information and equipment identification information that are included in the control connection request. In this case, the media server 6 transmits a connection permission notice including the data identification information and communication bandwidth having been determined, to the user equipment 2b via the connection control server 3 and the service control server 5.

### <Fourth Exemplary Embodiment>

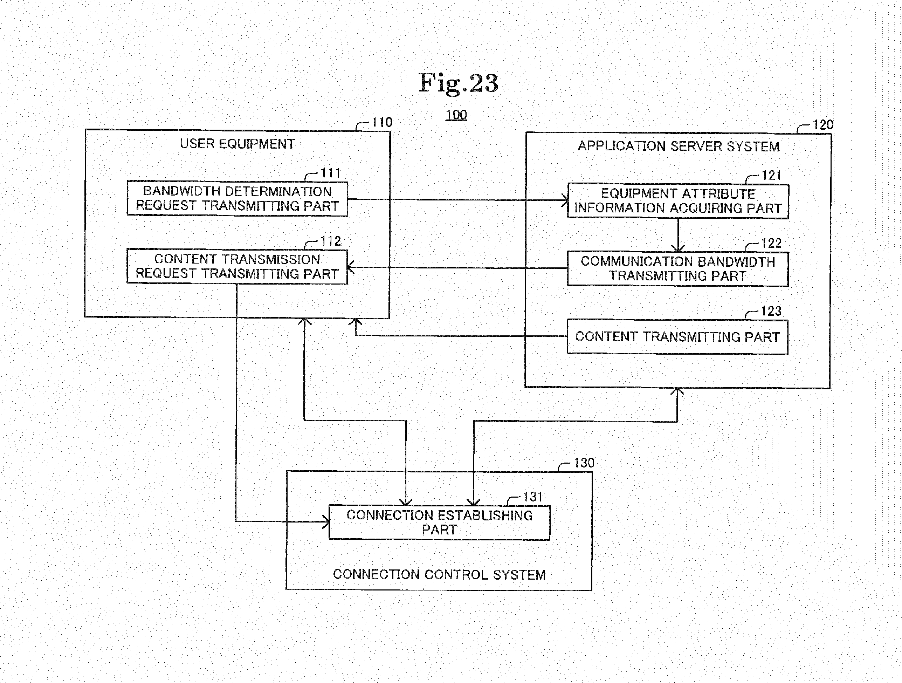

Next, a content distribution system according to a fourth exemplary embodiment of the present invention will be described with reference to Fig. 23.
A content distribution system 100 according to the fourth exemplary embodiment includes user equipment 110, an application server system 120, and a connection control system 130.

The user equipment 110 is equipped with a bandwidth determination request transmitting part (a bandwidth determination request transmitting means) 111 for transmitting a bandwidth determination request that is a request for determination of a communication bandwidth to the application server system 120 before transmitting a content transmission request for establishing a connection used for receiving content data that is coded with a specified code rate and that represents content;

The application server system 120 is equipped with: an equipment attribute information acquiring part (an equipment attribute information acquiring means) 121 for receiving the bandwidth determination request transmitted by the user equipment 110 and, based on the received bandwidth determination request, acquiring equipment attribute information representing ability of the user equipment 110, which is ability of the user equipment 110 to output content based on content data representing the content; and a communication bandwidth transmitting part (a communication bandwidth transmitting means) 122 for determining a communication bandwidth based on the acquired equipment attribute information and transmitting the determined communication bandwidth to the user equipment 110.

The user equipment 110 is further equipped with a content transmission request transmitting part (a content transmission request transmitting means) 112 for receiving the communication bandwidth transmitted by the application server system 120 and transmitting a content transmission request that includes the received communication bandwidth and that is a request for transmission of the content data, to the connection control system 130.

The connection control system 130 is equipped with a connection establishing part (a connection establishing means) 131 for receiving the content transmission request from the user equipment 110 and establishing a connection between the application server system 120 and the user equipment 110, which is a connection having the communication bandwidth included in the received content transmission request.

The application server system 120 is further equipped with a content transmitting part (a content transmitting means) 123 for transmitting the content data coded with a code rate corresponding to the determined communication bandwidth, to the user equipment 110 by using the established connection.

According to the above, the application server system 120 transmits content data coded with a code rate corresponding to a communication bandwidth determined based on the ability of the user equipment 110, to the user equipment 110. Consequently, it is possible to avoid that the application server system 120 transmits content data that the user equipment 110 cannot output (output-impossible content data) to the user equipment 110. As a result, the user equipment 110 can securely output content based on received content data.

Therefore, for example, even when the user wants to keep viewing content that the user has been viewing by using first user equipment, by using second user equipment and there is a difference of equipment attribute information (e.g., the information processing ability of the user equipment) between the first user equipment and the second user equipment, the user can keep viewing the content by using the second user equipment.

Further, according to the configuration described above, the content distribution system 100 determines a communication bandwidth corresponding to the ability of the user equipment 110 before the user equipment 110 transmits a content transmission request. After that, the content distribution system 100 establishes a connection having the determined communication bandwidth. Therefore, it is possible to avoid that a communication band is uselessly guaranteed. As a result, it is possible to inhibit shortage of a communication bandwidth at the time of establishing another connection.

Thus, according to the content distribution system 100, it is possible to inhibit shortage of a communication bandwidth, and it is also possible to prevent transmission of output-impossible content data to the user equipment 110.

In this case, it is preferred that:
the bandwidth determination request transmitting means is configured to transmit the bandwidth determination request including equipment identification information for identifying the user equipment;
the application server system is equipped with an equipment information storing means for storing the equipment identification information and the equipment attribute information in association with each other; and
the equipment attribute information acquiring means is configured to acquire the equipment attribute information stored in the equipment information storing means in association with the equipment identification information included in the received bandwidth determination request.

For example, equipment attribute information includes a plurality of information such as the resolution of a display of the user equipment and the information processing ability of the user equipment. Therefore, according to the configuration described above, it is possible to make the amount of information transmitted from the user equipment to the application server system smaller than in a case that the user equipment is configured to transmit equipment attribute information to the application server system. As a result, it is possible to decrease a communication load between the user equipment and the application server system.

In this case, it is preferred that:
the bandwidth determination request transmitting means is configured to transmit the bandwidth determination request including content identification information for identifying the content; and
the communication bandwidth transmitting means is configured to determine the communication bandwidth based on the content identification information included in the received bandwidth determination request and the acquired equipment attribute information.

There is a case that a code rate of content data that the application server system can transmit varies depending on content. Therefore, by configuring the content distribution system as described above, it is possible to determine, as a communication bandwidth, a value corresponding to a code rate of content data that the application server system can transmit among content data representing content that the user wants to view. As a result, the application server system can securely transmit content data coded with a code rate corresponding to the determined communication bandwidth.

In this case, it is preferred that:
the communication bandwidth transmitting means is configured to transmit the communication bandwidth having been determined and data identification information for identifying content data representing the content identified by the content identification information included in the received bandwidth determination request; and
the content transmission request transmitting means is configured to receive the communication bandwidth and the data identification information that have been transmitted by the application server system, and transmit the content transmission request including the communication bandwidth and the data identification information that have been received.

In this case, it is preferred that the communication bandwidth transmitting means is configured to transmit data identification information for identifying content data coded with a code rate corresponding to the determined communication bandwidth.

In this case, it is preferred that:
the equipment attribute information includes resolution information representing resolution of a display of the user equipment; and
the communication bandwidth transmitting means is configured to transmit data identification information for identifying content data having the resolution represented by the resolution information included in the acquired equipment attribute information.

In this case, it is preferred that:
the application server system is equipped with an available band information acquiring means for acquiring available band information representing a communication bandwidth that is available between the application server system and the user equipment; and
the communication bandwidth transmitting means is configured to determine the communication bandwidth based on at least the acquired equipment attribute information and the acquired available band information.

According to this, the application server system can determine a communication bandwidth depending on an available communication bandwidth. Therefore, for example, the application server system can determine a smaller value as a communication bandwidth when an available communication bandwidth is relatively small and, on the other hand, can determine a larger value as a communication bandwidth when an available communication bandwidth is relatively large. As a result, it is possible to avoid that content data cannot be transmitted due to shortage of a communication bandwidth.

In this case, it is preferred that:
the application server system is equipped with a processing load information acquiring means for acquiring processing load information representing a processing load on the application server system; and
the communication bandwidth transmitting means is configured to determines the communication bandwidth based on at least the acquired equipment attribute information and the acquired processing load information.

According to the above, the application server system can determine a communication bandwidth depending on a processing load on the application server system. Therefore, for example, the application server system can determine a smaller value as a communication bandwidth when a processing load is relatively small and, on the other hand, can determine a larger value as a communication bandwidth when a processing load is relatively large. As a result, it is possible to avoid that content data cannot be transmitted because a processing load on the application server system becomes extremely large.

In this case, it is preferred that the connection establishing means is configured to, when receiving the content transmission request from the user equipment, execute a band reservation process of reserving a communication band having the communication bandwidth included in the content transmission request between the application server system and the user equipment.

There is a case that the content distribution system is configured so that a connection is established only after a content transmission request is received by the connection control system and thereafter the connection control system receives a response from the application server system.

In this case, there is a fear of shortage of a communication bandwidth in a case that another connection is established during a period from reception of the content trans mission request by the connection control system to reception of a response from the application server system by the connection control system.

With regard to this, according to the configuration described above, a communication, band is reserved at a moment of reception of a content transmission request by the connection control system, so that it is possible to avoid shortage of a communication bandwidth when a connection is actually established.

In this case, it is preferred that:
the application server system is equipped with a response information transmitting means for, when receiving the content transmission request, transmitting response information for instructing a communication relay device that configures the reserved communication band and relays communication, to fix the communication band, to the connection control system; and
the connection establishing means is configured to, when receiving the response information from the application server system, execute a band fixation process of instructing the communication relay device configuring the reserved communication band and relaying communication, to fix the communication band.

In this case, it is preferred that:
the application server system includes a portal server configured to be capable of communicating with the user equipment in compliance with HTTP (HyperText Transfer Protocol); and
the portal server is equipped with the equipment attribute information acquiring means and the communication bandwidth transmitting means.

Further, in another aspect of the content distribution system described above, it is preferred that:
the application server system includes a service control server configured to be capable of communicating with the user equipment via the connection control system in compliance with SIP (Session Initiation Protocol); and
the service control server is equipped with the equipment attribute information acquiring means and the communication bandwidth transmitting means.

Further, in another aspect of the content distribution system described above, it is preferred that:
the application server system includes a media server configured to be capable of communicating with the user equipment via the connection control system in compliance with SIP (Session Initiation Protocol); and
the media server is equipped with the equipment attribute information acquiring means, the communication bandwidth transmitting means, and the content transmitting means.

Further, in another aspect of the content distribution system described above, it is preferred that:
the application server system includes a communication, bandwidth determination server configured to be capable of communicating with the user equipment; and
the communication bandwidth determination server is equipped with the equipment attribute information acquiring means and the communication, bandwidth transmitting means.

In this case, the equipment attribute information includes at least one of information representing resolution of a display of the user equipment, information representing information processing ability of a processing device of the user equipment, information representing a format of content data that the user equipment can output, and information representing a storage capacity of a storage device of the user equipment.

Further, a content distribution method of another exemplary embodiment of the present invention is applied to a content distribution system including user equipment, an application server system and a connection control system. The content distribution method includes:
before transmitting a content transmission request for establishing a connection used for receiving content data that is coded with a specified code rate and that represents content, transmitting a bandwidth determination request that is a request for determination of a communication bandwidth to the application server system, by the user equipment;
receiving the bandwidth determination request transmitted by the user equipment and, based on the received bandwidth determination request, acquiring equipment attribute information representing ability of the user equipment, which is ability of the user equipment to output content based on content data representing the content, by the application server system;
determining a communication bandwidth based on the acquired equipment attribute information and transmitting the determined communication bandwidth to the user equipment, by the application server system;
receiving the communication bandwidth transmitted by the application server system and transmitting a content transmission request that includes the received communication, bandwidth and that is a request for transmission of the content data, to the connection control system, by the user equipment;
receiving the content transmission request from the user equipment and establishing a connection between the application server system and the user equipment, which is a connection having the communication bandwidth included in the received content transmission request, by the connection control system; and
transmitting the content data coded with a code rate corresponding to the determined communication bandwidth , to the user equipment by using the established connection, by the application server system.

In this case, it is preferred that the content distribution system described above includes:
transmitting the bandwidth determination request including equipment identification information for identifying the user equipment, by the user equipment; and
acquiring the equipment attribute information that is stored in a storage device configured to store the equipment identification information and the equipment attribute information in association with each other, in association with the equipment identification information included in the received bandwidth determination request, by the application server system.

In this case, it is preferred that the content distribution system described above includes:
transmitting the bandwidth determination request including content identification information for identifying the content, by the user equipment; and
determining the communication bandwidth based on the content identification information included in the received bandwidth determination request and the acquired equipment attribute information, by the application server system.

In this case, it is preferred that the content distribution system described above includes:
transmitting the communication bandwidth having been determined and data identification information for identifying content data representing the content identified by the content identification information included in the received bandwidth determination request, by the application server system; and
receiving the communication bandwidth and the data identification information that have been transmitted by the application server system and transmitting the content transmission request including the communication bandwidth and the data identification information that have been received, by the user equipment.

In this case, it is preferred that the content distribution system described above includes transmitting data identification information for identifying content data coded with a code rate corresponding to the determined communication bandwidth, by the application server system.

In this case, it is preferred that:
the equipment attribute information includes resolution information representing resolution of a display of the user equipment; and
the content distribution method includes transmitting data identification information for identifying content data having the resolution represented by the resolution information included in the acquired equipment attribute information, by the application server system.

In this case, it is preferred that the content distribution method described above includes:
acquiring available band information representing a communication bandwidth that is available between the application server system and the user equipment, by the application server system; and
determining the communication bandwidth based on at least the acquired equipment attribute information and the acquired available band information, by the application server system.

In this case, it is preferred that the content distribution method described above includes:
acquiring processing load information representing a processing load on the application server system, by the application server system; and
determining the communication bandwidth based on at least the acquired equipment attribute information and the acquired processing load information, by the application server system.

Further, user equipment of another exemplary embodiment of the present invention includes:
a bandwidth determination request transmitting means for transmitting a bandwidth determination request that is a request for determination of a communication bandwidth to an application server system before transmitting a content transmission request for establishing a connection used for receiving content data that is coded with a specified code rate and that represents content; and
a content transmission request transmitting means for receiving the communication bandwidth transmitted by the application server system and transmitting a content transmission request that includes the received communication bandwidth and that is a request for transmission of the content data, to the connection control system.

In this case, it is preferred that the bandwidth determination request transmitting means is configured to transmit the bandwidth determination request including equipment identification information for identifying the user equipment.

In this case, it is preferred that the bandwidth determination request transmitting means is configured to transmit the bandwidth determination request including content identification information for identifying the content.

In this case, it is preferred that the content transmission request transmitting means is configures to receive the communication bandwidth and data identification information for identifying content data that have been transmitted by the application server system , and transmit the content transmission request including the communication bandwidth and the data identification information that have been received.

Further, a program of another exemplary embodiment of the present invention is a computer program including instructions for causing user equipment to realize:
a bandwidth determination request transmitting means for transmitting a bandwidth determination request that is a request for determination of a communication bandwidth to an application server system before transmitting a content transmission request for establishing a connection used for receiving content data that is coded with a specified code rate and that represents content; and
a content transmission request transmitting means for receiving the communication bandwidth transmitted by the application server system and transmitting a content transmission request that includes the received communication bandwidth and that is a request for transmission of the content data, to the connection control system.

Further, a server device of another exemplary embodiment of the present invention includes:
an equipment attribute information acquiring means for receiving a bandwidth determination request transmitted by user equipment as a request for determination of a communication bandwidth and, based on the received bandwidth determination request, acquiring equipment attribute information representing ability of the user equipment, which is ability of the user equipment to output content based on content data representing the content; and
a communication bandwidth transmitting means for determining a communication bandwidth based on the acquired equipment attribute information and transmitting the determined communication bandwidth to the user equipment.

In this case, it is preferred that the server device described above includes a content transmitting means for transmitting the content data coded with a code rate corresponding to the determined communication bandwidth, to the user equipment by using a connection that is established by a connection control system between the server device and the user equipment and that has the determined communication bandwidth.

In this case, it is preferred that:
the server device described includes an equipment information storing means for storing equipment identification information for identifying the user equipment and the equipment attribute information in association with each other; and
the equipment attribute information acquiring means is configured to acquire the equipment attribute information stored in the equipment information storing means in association with the equipment identification information include in the received bandwidth determination request.

In this case, it is preferred that the communication bandwidth transmitting means is configured to determine the communication bandwidth based on the equipment attribute information having been acquired and content identification information for identifying content included in the received bandwidth determination request.

In this case, it is preferred that the communication bandwidth transmitting means is configured to transmit the communication bandwidth having been determined and data identification information for identifying content data representing the content identified by the content identification information included in the received bandwidth determination request.

Further, a program of another exemplary embodiment of the present invention is a computer program including instructions for causing a server device to realize:
an equipment attribute information acquiring means for receiving a bandwidth determination request transmitted by user equipment as a request for determination of a communication bandwidth and, based on the received bandwidth determination request, acquiring equipment attribute information representing ability of the user equipment, which is ability of the user equipment to output content based on content data representing the content; and
a communication bandwidth transmitting means for determining a communication bandwidth based on the acquired equipment attribute information and transmitting the determined communication bandwidth to the user equipment.

The inventions of a content distribution method, user equipment, a program and a server device having the abovementioned configurations have the same actions as the content distribution system described above, and therefore, can achieve the object of the present invention described above.

Although the present invention has been described above with reference to the exemplary embodiments, the present invention is not limited to the aforementioned exemplary embodiments. The configurations and details of the present invention can be altered in various manners that can be understood by those skilled in the art within the scope of the present invention.

For example, in each of the exemplary embodiments, the media server 6 is configured to transmit preliminarily stored content data to each of the user equipment 2a, 2b..., but may be configured to, in a case that content data coded with a code rate corresponding to (e.g., coincident with) a communication bandwidth included in a content transmission request is not stored, generate the content data coded with the code rate based on the stored content data (i.e., transcode)

For example, in another modified example of each of the exemplary embodiments, the content distribution system may include a plurality of media servers. Moreover, in another modified example of each of the exemplary embodiments, the connection control system may include a plurality of connection control servers. Moreover, in another modified example of each of the exemplary embodiments, the content distribution system may be equipped with, instead of the service control server 5 and the media server 6, a server having both the functions of the service control server 5 and the media server 6.

Further, in another modified example of each of the exemplary embodiments, the user equipment may be configured to transmit equipment attribute information to the application server system.

Further, in another modified example of each of the exemplary embodiments, the content distribution system may be configured so that equipment attribute information includes data format information representing a format of content data that the user equipment can output. In this case, it is preferred that the application server system is configured to select content data having a format represented by data format information included in acquired equipment attribute information.

Further, in another modified example of each of the exemplary embodiments, equipment attribute information may be any one of information representing each of the resolution of a display of the user equipment, the information processing ability of a processing device of the user equipment, the format of content data that the user equipment can output and the storage capacity of the storage device of the user equipment, or may be any combination of the information.

Further, the user equipment may be a personal computer, a mobile phone terminal, a PHS (personal handyphone system), a PDA (personal data assistance, personal digital assistant), a car navigation terminal, a game terminal, or the like.
Further, in the respective exemplary embodiments, content is moving images, but may be only images or only sounds.

The respective functions of the content distribution system in each of the exemplary embodiments are realized by execution of programs (software) by the CPU, but may be realized by hardware such as circuits.

Further, the programs in each of the exemplary embodiments are stored in the storage device, but may be stored in a computer-readable recording medium. For example, the recording medium is a portable medium such as a flexible disk, an optical disk, a magneto-optical disk and a semiconductor memory.

Further, as other modified examples of the exemplary embodiments, any combinations of the exemplary embodiments and modified examples may be employed.

The present invention is based upon and claims the benefit of priority from Japanese patent application No. 2009-233966, filed on October 8, 2009, the disclosure of which is incorporated herein in its entirety by reference.

### INDUSTRIAL APPLICABILITY

The present invention can be applied to a Video on Demand system that distributes content via the IP network, an IPTV system that performs television broadcast via the IP network, and so on.

### DESCRIPTION OF REFERENCE NUMERALS

- 1: content distribution system
- 2a, 2b...: user equipment
- 3: connection control server
- 4: transport control server
- 5: service control server
- 6: media server
- 7: user information management server
- 8: portal server
- 9: communication bandwidth determination server
- 21: bandwidth determination request transmitting part
- 22: content transmission request transmitting part
- 23: content output part
- 30: core IMS part
- 31: call connection control part
- 40: transport function part
- 41: band guarantee part
- 50: service control functions part
- 51: information transmitting and receiving part
- 52: content information storage part
- 53: equipment attribute information acquiring part
- 54: communication bandwidth transmitting part
- 60: media functions part
- 61: information transmitting and receiving part
- 62: content distribution control part
- 63: content data storage part
- 64: content distribution part
- 65: equipment attribute information acquiring part
- 66: communication bandwidth transmitting part
- 70: user profile server functions part
- 71: equipment information storing part
- 80: service selection function part
- 81: equipment attribute information acquiring part
- 82: communication bandwidth transmitting part
- 100: content distribution system
- 110: user equipment
- 111: bandwidth determination request transmitting part
- 112: content transmission request transmitting part
- 120: application server system
- 121: equipment attribute information acquiring part
- 122: communication bandwidth transmitting part
- 123: content transmitting part
- 130: connection control system
- 131: connection establishing part
- NW: communication line

## Claims

1. A content distribution system , comprising user equipment, an application server system, and a connection control system , wherein:
the user equipment is equipped with a bandwidth determination request transmitting means for transmitting a bandwidth determination request that is a request for determination of a communication bandwidth to the application server system before transmitting a content transmission request for establishing a connection used for receiving content data that is coded with a specified code rate and that represents content;
the application server system is equipped with:
an equipment attribute information acquiring means for receiving the bandwidth determination request transmitted by the user equipment and, based on the received bandwidth determination request, acquiring equipment attribute information representing ability of the user equipment, which is ability of the user equipment to output content based on content data representing the content; and
a communication bandwidth transmitting means for determining a communication bandwidth based on the acquired equipment attribute information and transmitting the determined communication bandwidth to the user equipment;
the user equipment is further equipped with a content transmission request transmitting means for receiving the communication bandwidth transmitted by the application server system and transmitting a content transmission request that includes the received communication bandwidth and that is a request for transmission of the content data, to the connection control system;
the connection control system is equipped with a connection establishing means for receiving the content transmission request from the user equipment and establishing a connection between the application server system and the user equipment, which is a connection having the communication bandwidth included in the received content transmission request; and
the application server system is further equipped with a content transmitting means for transmitting the content data code with a code rate corresponding to the determined communication bandwidth, to the user equipment by using the established connection.

2. The content distribution system according to Claim 1, wherein:
the bandwidth determination request transmitting means is configured to transmit the bandwidth determination request including equipment identification information for identifying the user equipment;
the application server system is equipped with an equipment information storing means for storing the equipment identification information and the equipment attribute information in association with each other; and
the equipment attribute information acquiring means is configured to acquire the equipment attribute information stored in the equipment information storing means in association with the equipment identification information included in the received bandwidth determination request.

3. The content distribution system according to Claim 1 or 2, wherein:
the bandwidth determination request transmitting means is configured to transmit the bandwidth determination request including content identification information for identifying the content; and
the communication bandwidth transmitting means is configured to determine the communication bandwidth based on the content identification information included in the received bandwidth determination request and the acquired equipment attribute information.

4. The content distribution system according to Claim 3, wherein:
the communication bandwidth transmitting means is configured to transmit the communication bandwidth having been determined and identification information for identifying content data representing the content identified by the content identification information included in the received bandwidth determination request; and
the content transmission request transmitting means is configured to receive the communication bandwidth and the data identification information that have been transmitted by the application server system, and transmit the content transmission request including the communication bandwidth and the data identification information that have been received.

5. The content distribution system according to Claim 4, wherein the communication bandwidth transmitting means is configured to transmit data identification information for identifying content coded with a code rate corresponding to the determined communication bandwidth.

6. The content distribution system according to Claim 4 or 5, wherein:
the equipment attribute information includes resolution information representing resolution of a display of the user equipment; and
the communication bandwidth transmitting means is configured to transmit data identification information for identifying content data having the resolution represented by the resolution information includes in the acquired equipment attribute information.

7. The content distribution system according to any of Claims 1 to 6, wherein:
the application server system is equipped with an available band information acquiring means for acquiring available band information representing a communication bandwidth that is available between the application server system and the user equipment; and
the communication bandwidth transmitting means is configured to determine the communication bandwidth based on at least the acquired equipment attribute information and the acquired available band information.

8. The content distribution system according to any of Claims 1 to 7, wherein:
the application server system is equipped with a processing load information acquiring means for acquiring processing load information representing a processing load on the application server system; and
the communication bandwidth transmitting means is configured to determine the communication bandwidth based on at least the acquired equipment attribute information and the acquired processing load information.

9. The content distribution system according to any of Claims 1 to 8, wherein the connection establishing means is configured to, when receiving the content transmission request from the user equipment, execute a band reservation process of reserving a communication band having the communication bandwidth included in the content transmission request between the application server system and the user equipment.

10. The content distribution system according to Claim 9, wherein:
the application server system is equipped with a response information transmitting means for, when receiving the content transmission request, transmitting response information for instructing a communication relay device that configures the reserved communication band and relays communication, to fix the communication band, to the connection control system; and
the connection establishing means is configured to, when receiving the response information from the application server system, execute a band fixation process of instructing the communication relay device configuring the reserved communication band and relaying communication to fix the communication band.

11. The content distribution system according to any of Claims 1 to 10, wherein:
the application server system includes a portal server configured to be capable of communicating with the user equipment in compliance with HTTP (HyperText Transfer Protocol); and
the portal server is equipped with the equipment attribute information acquiring means the communication bandwidth transmitting means.

12. The content distribution system according to any of Claims 1 to 10, wherein:
the application server system includes a service control server configured to be capable of communicating with the user equipment via the connection control system in compliance with SIP (Session Initiation Protocol); and
the service control server is equipped with the equipment attribute information acquiring means and the communication bandwidth transmitting means.

13. The content distribution system according to any of Claims 1 to 10, wherein:
the application server system includes a media server configured to be capable of communicating with the user equipment via the connection control system in compliance with SIP (Session Initiation Protocol); and
the media server is equipped with the equipment attribute information acquiring means, the communication bandwidth transmitting means, and the content transmitting means.

14. The content distribution system according to any of claims 1 to 10, wherein:
the application server system includes a communication bandwidth determination server configured to be capable of communicating with the user equipment; and
the communication bandwidth determination server is equipped with the equipment attribute information acquiring means and the communication bandwidth transmitting means.

15. The content distribution system according to any of Claims 1 to 14, wherein the equipment attribute information includes at least one of information representing resolution of a display of the user equipment, information representing information processing ability of a processing device of the user equipment, information representing a format of content data that the user equipment can output, and information representing a storage capacity of a storage device of the user equipment.

16. A content distribution method applied to a content distribution system including user equipment, an application server system and a connection control system, the content distribution method comprising:
before transmitting a content transmission request for establishing a connection used for receiving content data that is coded with a specified code rate and that represents content, transmitting a bandwidth determination request that is a request for determination of a communication bandwidth to the application server system, by the user equipment;
receiving the bandwidth determination request transmitted by the user equipment and, based on the received bandwidth determination request, acquiring equipment attribute information representing ability of the user equipment, which is ability of the user equipment to output content based on content data representing the content, by the application server system;
determining a communication bandwidth based on the acquired equipment attribute information and transmitting the determined communication bandwidth to the user equipment, by the application server system;
receiving the communication bandwidth transmitted by the application server system and transmitting a content transmission request that includes the received communication bandwidth and that is a request for transmission of the content data, to the connection control system, by the user equipment;
receiving the content transmission request from the user equipment and establishing a connection between the application server system and the user equipment, which is a connection having the communication bandwidth included in the received content transmission request, by the connection control system; and
transmitting the content data coded with a code rate corresponding to the determined communication bandwidth, to the user equipment by using the established connection, by the application server system.

17. The content distribution method according to Claim 16, wherein:
transmitting the bandwidth determination request including equipment identification information for identifying the user equipment, by the user equipment; and
acquiring the equipment attribute information that is stored in a storage device configured to store the equipment identification information and the equipment attribute information in association with each other, in association with the equipment identification information included in the received bandwidth determination request, by the application server system.

18. The content distribution method according to Claim 16 or 17, wherein:
transmitting the bandwidth determination request including content identification information for identifying the content, by the user equipment; and
determining the communication bandwidth based on the content identification information included in the received bandwidth determination request and the acquired equipment attribute information, by the application server system.

19. The content distribution method according to Claim 18, wherein:
transmitting the communication bandwidth having been determined and data identification information for identifying content data representing the content identified by the content identification information included in the received bandwidth determination request, by the application server system; and
receiving the communication bandwidth and the data identification information that have been transmitted by the application server system and transmitting the content transmission request including the communication bandwidth and the data identification information that have been received, by the user equipment.

20. The content distribution method according to Claim 19, comprising transmitting data identification information for identifying content data coded with a code rate corresponding to the determined communication bandwidth, by the application server system.

21. The content distribution method according to Claim 19 or 20, wherein the equipment attribute information includes resolution information representing resolution of a display of the user equipment,
the content distribution method comprising transmitting data identification information for identifying content data having the resolution represented by the resolution information included in the acquired equipment attribute information, by the application server system.

22. The content distribution method according to any of Claims 16 to 21, comprising:
acquiring available band information representing a communication bandwidth that is available between the application server system and the user equipment, by the application server system; and
determining the communication bandwidth based on at least the acquired equipment attribute information and the acquired available band information, by the application server system.

23. The content distribution method according to any of Claims 16 to 22, comprising:
acquiring processing load information representing a processing load on the application server system, by the application server system; and
determining the communication bandwidth based on at least the acquired equipment attribute information and the acquired processing load information, by the application server system.

24. User equipment comprising:
a bandwidth determination request transmitting means for transmitting a bandwidth determination request that is a request for determination of a communication bandwidth to an application server system before transmitting a content transmission request for establishing a connection used for receiving content data that is coded with a specified code rate and that contend; and
a content transmission request transmitting means for receiving the communication bandwidth transmitted by the application server system and transmitting a content transmission request that includes the received communication bandwidth and that is a request for transmission of the content data, to the connection control system.

25. The user equipment according to Claim 24, wherein the bandwidth determination request transmitting means is configured to transmit the bandwidth determination request including equipment identification information for identifying the user equipment.

26. The user equipment according to Claim 24 or 25, wherein:
the bandwidth determination request transmitting means is configured to transmit the bandwidth determination request including content identification information for identifying the content.

27. The user equipment according to Claim 26, wherein the content transmission request transmitting means is configured to receive the communication bandwidth and data identification information for identifying content data that have been transmitted by the application server system, and transmit the content transmission request including the communication bandwidth and the data identification information that have been received.

28. A computer program comprising instructions for causing user equipment to realize:
a bandwidth determination request transmitting means for transmitting a bandwidth determination request that is a request for determination of a communication bandwidth to an application server system before transmitting a content transmission request for establishing a connection used for receiving content data that is coded with a specified code rate and that represents content; and
a content transmission request transmitting means for receiving the communication bandwidth transmitted by the application server system and transmitting a content transmission request that includes the received communication bandwidth and that is a request for transmission of the content data, to the connection control system.

29. A server device comprising:
an equipment attribute information acquiring means for receiving a bandwidth determination request transmitted by user equipment as a request for determination of a communication bandwidth and, based on the received bandwidth determination request, acquiring equipment attribute information representing ability of the user equipment, which is ability of the user equipment to output content based on content data representing the content; and
a communication bandwidth transmitting means for determining a communication bandwidth based on the acquired equipment attribute information and transmitting the determined communication bandwidth to the user equipment.

30. The server device according to Claim 29, comprising a content transmitting means for transmitting the content data coded with a code rate corresponding to the determined communication bandwidth, to the user equipment by using a connection that is established by a connection control system between the server device and the user equipment and that has the determined communication bandwidth.

31. The server device according to Claim 29 or 30, comprising an equipment information storing for storing equipment identification information for identifying the user equipment and the equipment attribute information in association with each other,
wherein the equipment attribute information acquiring means is configured to acquire the equipment attribute information stored in the equipment information storing means in association with the equipment identification information included in the received bandwidth determination request.

32. The server device according to any of Claims 29 to 31, wherein the communication bandwidth transmitting means is configured to determine the communication bandwidth based on the equipment attribute information having been acquired and content identification information for identifying content included in the received bandwidth determination request.

33. The server device according to Claim 32, wherein the communication bandwidth transmitting means is configured to transmit the communication bandwidth having been determined and data identification information for identifying content data representing the content identified by the content identification information included in the received bandwidth determination request.

34. A computer program comprising instructions for causing a server device to realize:
an equipment attribute information acquiring means for receiving a bandwidth determination request transmitted by user equipment as a request for determination of a communication bandwidth and, based on the received bandwidth determination request, acquiring equipment attribute information representing ability of the user equipment, which is ability of the user equipment to output content based on content data representing the content; and
a communication bandwidth transmitting means for determining a communication bandwidth based on the acquired equipment attribute information and transmitting the determined communication bandwidth to the user equipment.
